# EUROPÄISCHE PATENTSCHRIFT

(11) **EP 2 058 950 B1**
(45) Veröffentlichungstag und Bekanntmachung des Hinweises auf die Patenterteilung: **27.01.2010**
(21) Anmeldenummer: 08019188.5
(22) Anmeldetag: 03.11.2008
(51) Int. Cl.: H04B 1/38

(54) **Vorrichtung und Verfahren zum Herstellen einer Kommunikationsverbindung zwischen einem Mobilfunkendgerät und einem Kommunikationsnetz**
Device and method for producing a communication link between a mobile terminal and a communication network
Dispositif et procédé destinés à la fabrication d'une liaison de communication entre un appareil radio mobile et un réseau de communication

(30) Priorität: 08.11.2007 DE 102007053317
(43) Veröffentlichungstag der Anmeldung: 13.05.2009
(73) Patentinhaber: Mutterlose, Dirk, 3013 Bern (CH)
(72) Erfinder: Mutterlose, Dirk, 3013 Bern (CH)
(74) Vertreter: Müller-Boré & Partner Patentanwälte

(56) Entgegenhaltungen:
- WO-A-2005/041430
- DE-A1- 10 008 751
- DE-A1- 19 800 967
- US-A1- 2003 076 951

## Beschreibung

Die vorliegende Erfindung betrifft eine Überbrückungsvorrichtung zum Einrichten eines Teilabschnitts eines Kommunikationsweges zwischen wenigstens einem Mobilfunkendgerät, das eine Antenne und eine Antennenbuchse aufweist, und wenigstens einem Kommunikationsnetz, sowie ein Verfahren zum Herstellen einer Kommunikationsverbindung zwischen einem Mobilfunkendgerät und einem Kommunikationsnetz mittels einer solchen Überbrückungsvorrichtung, die eine Kommunikation zwischen dem Mobilfunkendgerät und dem Kommunikationsnetz ermöglicht.

Bekannte Kommunikationsnetze, und insbesondere Kommunikationsnetze, die Teil eines mobilen Kommunikationssystems sind, weisen oftmals einen als Basisstationssubsystem (Base Station Subsystem) oder BSS bezeichneten funkbezogenen Teil sowie ein Kernnetz auf, das auch Network Subsystem oder NSS genannt wird. Unter der Bezeichnung BSS werden alle Elemente und Funktionen-zusammengefasst, die für eine Verbindung zwischen dem Kommunikationsnetz und Mobilfunkendgeräten mobiler Gesprächsteilnehmer über eine drahtlose Funkverbindung notwendig sind. Dabei wird die drahtlose Funkverbindung auch als Luftschnittstelle bezeichnet. Dagegen umfasst das NSS alle für die Vermittlung von Gesprächen, die Teilnehmerverwaltung und das Mobilitätsmanagement benötigten Komponenten des Kommunikationsnetzes.

Ein BSS umfasst wiederum eine Vielzahl an Basisstationen, auch Base Transceiver Station oder BTS genannt, und eine oder mehrere Basisstations-Steuereinrichtungen (Base Station Controller) oder BSC. Während die Basisstationen als Schnittstellen zu Mobilfunkendgeräten fungieren, sind die BSC für den Aufbau, Abbau und die Aufrechterhaltung sämtlicher Verbindungen zu den Mobilfunkendgeräten über alle Basisstationen in einem bestimmten Bereich zuständig.

Über die Luftschnittstelle kann ein Mobilfunkendgerät aufgrund seiner begrenzten Sendeleistung nur dann mit einer Basisstation Verbindung aufnehmen, wenn der Abstand zwischen beiden kleiner ist als ein bestimmter Maximalabstand. Jede Basisstation deckt somit nur ein begrenztes Gebiet ab, das auch Zelle genannt wird.

Von einer Basisstation verwendete Funkfrequenzen dürfen nicht von benachbarten Basisstationen verwendet werden, da sich die Basisstationen sonst infolge von Interferenzeffekten gegenseitig stören würden. Normalerweise hat jede Basisstation aber eine Mehrzahl benachbarter Basisstationen, so dass nur eine sehr begrenzte Anzahl an Funkfrequenzen pro Basisstation verwendet werden kann. Infolgedessen sind die Kapazitäten von Luftschnittstellen begrenzt und eine Basisstation, und damit letztendlich auch das Kommunikationsnetz, kann über eine Luftschnittstelle nur mit einer begrenzten Anzahl von Mobilfunkendgeräten gleichzeitig kommunizieren.

Das Dokument WO 2005/041430 A1 offenbart eine Basisstation, BS, zum Einrichten einer Funkverbindung zwischen einem Mobilfunkendgerät, MS, und einem GSM-Kommunikationsnetz. Die MS verfügt über eine Antenne und eine Antennenbuchse. Die BS umfasst eine Anschlusseinrichtung, die an die Antennenbuchse der MS angeschlossen werden kann, und eine mit der Anschlusseinrichtung verbundene Sende-/Empfangseinheit. Wenn die MS an die BS angeschlossen ist, werden die Funksignale zwischen der MS und dem GSM-Kommunikationsnetz von der Sende-/Empfangseinheit der BS übertragen. Hierbei wird eine Emission von Funkwellen durch die Antenne der MS unterbunden, solange die MS und das GSM-Mobilfunknetz miteinander kommunizieren.

Es ist daher die Aufgabe der vorliegenden Erfindung, eine Vorrichtung und ein Verfahren zum Herstellen einer Kommunikationsverbindung zwischen einem Mobilfunkendgerät und einem Kommunikationsnetz zu schaffen, die es erlauben, die Anzahl von Mobilfunkendgeräten, mit denen das Kommunikationsnetz gleichzeitig kommunizieren kann, zu erhöhen.

Diese Aufgabe wird durch eine Überbrückungsvorrichtung mit den Merkmalen des Anspruchs 1 und das Verfahren mit den Merkmalen des Anspruchs 19 gelöst. Bevorzugte Ausführungsformen sind Gegenstand der abhängigen Ansprüche.

Mit der vorliegenden Erfindung ist eine Kommunikationsverbindung zwischen dem Mobilfunkendgerät und dem Kommunikationsnetz herstellbar, wobei mittels der Überbrückungsvorrichtung ein Teilabschnitt des Kommunikationsweges zwischen Mobilfunkendgerät und Kommunikationsnetz eingerichtet wird und der Kommunikationsweg teilweise über ein bi- oder multidirektionales Netzwerk, insbesondere das Internet, verläuft. Das Kommunikationsnetz kann dabei wie bei herkömmlichen Verbindungen zwischen Mobilfunkendgeräten und dem Kommunikationsnetz über Luftschnittstellen für eine Verbindung des mit Hilfe der Überbrückungsvorrichtung mit dem Kommunikationsnetz verbundenen Mobilfunkendgeräts mit einem beliebigen weiteren mit dem Kommunikationsnetz verbundenen Endgerät sorgen, bei dem es sich beispielsweise ebenfalls um ein Mobilfunkendgerät oder ein Festnetzendgerät oder aber um ein mittels einer Überbrückungsvorrichtung gemäß der vorliegenden Erfindung mit dem Kommunikationsnetz verbundenes Mobilfunkendgerät handeln kann.

Gemäß der Erfindung wird die Luftschnittstelle zwischen Mobilfunkendgerät und Kommunikations mittels der Überbrückungsvorrichtung umgangen oder überbrückt, und da die Emission von Funkwellen durch die Antenne des Mobilfunkendgeräts zumindest dann unterbindbar ist, wenn das Mobilfunkendgerät und das Kommunikationsnetz miteinander kommunizieren, werden für die Kommunikation zwischen Mobilfunkendgerät und Kommunikationsnetz auch keinerlei Kapazitäten der Luftschnittstelle beansprucht. Grundsätzlich erlaubt die vorliegende Erfindung eine Entlastung der Luftschnittstellen in Fällen, in denen eine Inanspruchnahme derselben nicht zwangsläufig ist, wie zum Beispiel wenn sich ein Nutzer des Mobilfunkendgeräts nicht außer Haus befindet. Ferner kann das Kommunikationsnetz gleichzeitig mit dem erfindungsgemäß mit ihm verbundenen Mobilfunkendgerät und über seine Luftschnittstellen mit der maximalen Anzahl an Mobilfunkendgeräten kommunizieren, welche die Kapazitäten der Luftschnittstellen erlauben. Mit der vorliegenden Erfindung lassen sich ganz allgemein gleichzeitige Kommunikationsverbindungen zwischen einem Kommunikationsnetz und beliebig vielen Mobilfunkendgeräten herstellen.

Weil heutige Mobilfunkendgeräte über die Funktionalität der Umschaltung zwischen der Antenne und der Antennenbuchse verfügen, was beispielsweise auch in Kraftfahrzeug-Freisprecheinrichtungen mit einer Außenantenne ausgenutzt wird, ist dem Fachmann allgemein bekannt, wie die Unterbindung der Emission von Funkwellen durch die Antenne des Mobilfunkendgeräts auszuführen ist, und es wird daher aus Gründen der Kürze auf eine ausführliche Darstellung davon verzichtet. Dabei kann die Emission von Funkwellen unmittelbar mit Anschließen der Anschlusseinrichtung an die Antennenbuchse unterbunden werden, oder das Unterbinden der Emission von Funkwellen kann aufgrund eines zum Beispiel von der Überbrückungsvorrichtung ausgesandten Steuerbefehls nach Anschließen der Anschlusseinrichtung an die Antennenbuchse erfolgen.

Ein weiterer Vorteil der vorliegenden Erfindung ist der, dass das Mobilfunkendgerät nicht an diejenige Basisstation gebunden ist, in deren Zelle es sich gerade befindet, da über das Internet eine Kommunikationsverbindung zum Kommunikationsnetz im Allgemeinen von einem beliebigen Ort der Erde aus herstellbar ist, auch wenn sich dieser Ort beliebig weit außerhalb der Zellen aller Basisstationen des Kommunikationsnetzes befindet. Außerdem muss bei einer herkömmlichen Kommunikationsverbindung zwischen Mobilfunkendgerät und Kommunikationsnetz über die Luftschnittstelle das von der Basisstation empfangene Funksignal mit aufwendigen Misch- und Verstärkerprozeduren bearbeitet werden, bevor es weiterverwendet werden kann. All diese Arbeitsschritte entfallen bei einer Kommunikation zwischen Mobilfunkendgerät und Kommunikationsnetz nach Herstellen einer Kommunikationsverbindung gemäß der vorliegenden Erfindung, was zu einer weiteren Entlastung des Kommunikationsnetzes führt. Beim Handover genannten Übergang des Mobilfunkendgeräts von einer Zelle in eine andere Zelle treten ferner keinerlei Probleme auf. Insbesondere müssen keine Handoverdaten übergeben werden. Logische Kanäle, über welche gewöhnlicherweise Daten über die Qualität der Luftschnittstelle übertragen werden, wie zum Beispiel der weiter unten näher beschriebene BCCH-Kanal oder der SACCH-Kanal, können vereinfacht werden, wobei Qualitätsmessungen der Luftschnittstelle überhaupt entfallen können.

Moderne Mobilfunkendgeräte weisen in der Regel Geräteschnittstellen auf, über die Zusatzgeräte mit dem Mobilfunkendgerät gekoppelt werden können. Solche Zusatzgeräte können Stromversorgungseinrichtungen zur Stromversorgung des Mobilfunkendgeräts wie zum Beispiel ein Ladegerät oder ein Netzadapter sein. Dabei kann die Stromversorgung für den momentanen Betrieb des Mobilfunkendgeräts vorgesehen sein oder zum Aufladen wieder aufladbarer Stromquellen des Mobilfunkendgeräts wie zum Beispiel von Akkumulatoren. Weitere Beispiele für Zusatzgeräte wären Kopfhörer sowie Freisprecheinrichtungen, die an das Mobilfunkendgerät anschließbar sind. Entsprechend den vorgesehenen Zusatzgeräten kann die Überbrückungsvorrichtung an das Mobilfunkendgerät spezifisch angepasst bzw. ausgebildet sein. Gemäß einer bevorzugten Ausführungsform der Überbrückungsvorrichtung umfasst die Anschlusseinrichtung wenigstens einen Antennenstecker, der zum Anschließen der Anschlusseinrichtung an die Antennenbuchse des Mobilfunkendgeräts in die Antennenbuchse steckbar ist, sowie wenigstens eine an eine Geräteschnittstelle des Mobilfunkendgeräts anschließbare Anschlussklemme. Die Anschlussklemme kann zum Beispiel an eine serielle oder eine analoge oder eine USB-Schnittstelle (Universal Serial Bus) des Mobilfunkendgeräts anschließbar sein. Mit einer solchen Anschlussklemme lässt sich die Funktionalität der Geräteschnittstelle von dem Mobilfunkendgerät an eine andere Stelle der Überbrückungsvorrichtung führen, wenn die Geräteschnittstelle beispielsweise bei Anschließen der Anschlusseinrichtung an die Antennenbuchse des Mobilfunkendgeräts von Teilen der Überbrückungsvorrichtung ganz oder teilweise verdeckt oder ein Zugang zur Geräteschnittstelle behindert würde.

So ist es unter anderem möglich, mit Anschließen der Anschlussklemme an die Geräteschnittstelle des Mobilfunkendgeräts eine Verbindung zwischen der Geräteschnittstelle und der Schnittstelle der Überbrückungsvorrichtung herzustellen. Auf diese Weise ist eine Steuerungskopplung zwischen dem Mobilfunkendgerät und dem Computer realisierbar, über welche das Mobilfunkendgerät vom Computer gesteuert werden kann.

Bevorzugt weist die Überbrückungsvorrichtung wenigstens eine Kopplungseinrichtung für ein Zusatzgerät auf, wobei mit Anschließen der Anschlussklemme an die Geräteschnittstelle des Mobilfunkendgeräts eine Verbindung zwischen der Geräteschnittstelle und der Kopplungseinrichtung herstellbar ist. An eine solche Kopplungseinrichtung lässt sich dann das Zusatzgerät an die Überbrückungsvorrichtung und über diese an das Mobilfunkendgerät koppeln. Besonders bevorzugt ist die Kopplungseinrichtung für eine Stromversorgungseinrichtung zur Stromversorgung des Mobilfunkendgeräts oder für einen Kopfhöreranschluss oder eine Freisprecheinrichtung als Zusatzgerät ausgelegt.

Bei der Schnittstelle zur Verbindung der Überbrückungsvorrichtung mit dem Computer, welcher mit einem bi- oder multidirektionalen Netzwerk verbindbar ist, insbesondere dem internetfähigen Computer, kann es sich ganz allgemein um eine beliebige Schnittstelle handeln. So können Überbrückungsvorrichtungen mit einer seriellen oder einer parallelen Schnittstelle oder einer USB-Schnittstelle oder einer Infrarot- bzw. IrDA-Schnittstelle oder einer Bluetooth-Schnittstelle oder einer UART-Schnittstelle (Universal Asynchronous Receiver and Transmitter) versehen sein. In Falle einer seriellen Schnittstelle kann beispielsweise an einem Modem-Kommunikationsport des Mobilfunkendgeräts eine Software des Geräteherstellers zur Steuerung des Mobilfunkendgeräts genutzt werden. Die Schnittstelle kann darüber hinaus eine Breitbandanschlusseinheit oder einen Splitter umfassen, sofern beispielsweise ein- oder ausgehende Daten und/oder Frequenzen ein- oder ausgehender Signale voneinander getrennt und an verschiedenen Anschlüssen zur Verfügung gestellt werden sollen. Andererseits können mittels eines Splitters auch verschiedene gleichförmige Signale verschiedenen Nutzern über dasselbe Protokoll zugeführt werden.

Vorzugsweise umfasst die Überbrückungsvorrichtung eine Sender-/Empfängereinrichtung. Mittels einer Sender-/Empfängereinrichtung lassen sich beispielsweise Frequenzen eines vom Mobilfunkendgeräts ausgehenden Signals modulieren und in ein Signal niedrigerer oder höherer Frequenz umwandeln. Dabei ist die Sender-/Empfängereinrichtung vorteilhaft zur Erfassung einer vom Mobilfunkendgerät aufgebrachten Leistung und/oder von am Ort des Mobilfunkendgeräts und/oder der Überbrückungsvorrichtung in Benutzung befindlichen Funkfrequenzen eingerichtet. Obwohl während der Kommunikation zwischen dem Mobilfunkendgerät und dem Kommunikationsnetz die Emission von Funkwellen durch die Antenne des Mobilfunkendgeräts unterbunden ist und die Kommunikation auf dem mittels der Überbrückungsvorrichtung errichteten Teilstück des Kommunikationsweges drahtgebunden verläuft, kann es doch zu störenden Einflüssen von am Ort des Mobilfunkendgeräts und/oder Überbrückungsvorrichtung benutzten Funkfrequenzen auf die Kommunikation kommen, sofern bei der Kommunikation eine diesen benutzten Funkfrequenzen vergleichbare Frequenz verwendet wird. Sofern mit der Sender-/Empfängereinrichtung eine am Ort des Mobilfunkendgeräts und/oder der Überbrükkungsvorrichtung in Benutzung befindliche Funkfrequenz erfasst wird, ist es von Vorteil, wenn für die Kommunikation eine von dieser benutzten Funkfrequenz ausreichend verschiedene Frequenz gewählt wird.

Besonders bevorzugt wird für die Kommunikation zwischen Mobilfunkendgerät und Kommunikationsnetz eine Frequenz des aus dem GSM Standard bekannten 1800 MHz Frequenzbandes benutzt und die Sender-/Empfängereinrichtung ist für die Nutzung dieser Frequenz eingerichtet, wobei mit GSM üblicherweise das "Global System for Mobile Communication" abgekürzt wird. Es ist aber auch möglich, für die Kommunikation nichtsdestotrotz einen GSM-Frequenzbereich zu nutzen und die Sender-/Empfängereinrichtung entsprechend auszulegen. Insbesondere kann ein Frequenzbereich von 824-849 MHz und/oder 869-894 MHz und/oder 876-915 Hz und/oder 880-915 MHz und/oder 890-915 MHz und/oder 921-960 MHz und/oder 925-960 MHz und/oder 935-960 MHz und/oder 1710-1785 MHz und/oder 1805-1880 MHz und/oder 1850-1910 MHz und/oder 1930-1990 MHz genutzt werden und die Sender-/Empfängereinrichtung kann entsprechend ausgelegt sein.

Vorteilhafterweise umfasst die Überbrückungsvorrichtung einen digitalen Signalprozessor oder DSP zur Signalverarbeitung im Basisband (baseband). Daneben kann der DSP zur Bearbeitung eines bereits digitalisierten Signals vor der Dekodierung eingesetzt werden.

Zur Umwandlung von analogen Signalen in digitale Signale und umgekehrt kann die Überbrückungsvorrichtung einen Analog/Digitalwandler zur Umwandlung von analogen Signalen in digitale Signale und/oder einen Digital/Analogwandler zur Umwandlung von digitalen Signalen in analoge Signale umfassen. Bevorzugt ist ein Analog/Digitalwandler aus Sicht der Überbrückungsvorrichtung in Ernpfangsrichtung vorgesehen, während für den Sendebetrieb ein Digital/Analogwandler vorgesehen ist. Ein Analog/Digitalwandler und ein Digital/Analogwandler können aber auch parallel betrieben werden.

Darüber hinaus kann die Überbrückungsvorrichtung auch eine Steuereinheit aufweisen. In der Steuereinheit können Steuerroutinen für grundlegende Funktionalitäten der Überbrückungsvorrichtung implementiert sein. So kann die Steuereinheit zur Aufbereitung von Daten vorgesehen sein. Sie kann zudem die Sender-/Empfängereinrichtung zur Erfassung einer vom Mobilfunkendgerät aufgebrachten Leistung und/oder von am Ort des Mobilfunkendgeräts oder der Überbrückungsvorrichtung in Benutzung befindlichen Funkfrequenzen steuern. Bevorzugt verfügt die Steuereinheit über alle zur Bewältigung ihrer Aufgaben notwendigen Informationen und weist eine ausreichend hohe Eigenlogik auf, um ihre Aufgaben auch dann erfüllen zu können, wenn eine externe Steuerung der Überbrückungsvorrichtung beispielsweise durch den Computer und über deren Schnittstelle nicht möglich ist, weil gerade keine Verbindung zwischen Überbrückungsvorrichtung und Computer besteht.

Bei einer bevorzugten Ausführungsform ist die Anschlusseinrichtung an eine Mehrzahl von jeweiligen Mobilfunkendgeräten anschließbar. Beispielsweise kann die Anschlusseinrichtung mehrere Antennenstecker aufweisen, wobei jeder Antennenstekker an eine Antennenbuchse eines jeweiligen Mobilfunkendgerätes anschließbar ist. Ebenso kann die Anschlusseinrichtung auch mehrere Anschlussklemmen aufweisen, wobei jede Anschlussklemme an eine Geräteschnittstelle eines jeweiligen Mobilfunkendgerätes anschließbar ist. Mit einer derartigen Überbrückungsvorrichtung lassen sich parallele bzw. simultane Kommunikationsverbindungen zwischen mehreren Mobilfunkendgeräteri und einem oder mehreren Kommunikationsnetzen herstellen. Entsprechend kann die Überbrückungsvorrichtung auch eine Mehrzahl von Schnittstellen umfassen, mit denen sie mit jeweiligen internetfähigen Computern verbindbar ist. Dabei kann jede Schnittstelle von einer anderen Art sein, es können aber auch zwei oder mehrere der Schnittstellen von derselben Art sein. Zum Beispiel kann eine erste Schnittstelle eine serielle Schnittstelle sein und eine zweite Schnittstelle eine parallele Schnittstelle, um die Überbrückungsvorrichtung mit dem Computer wahlweise über die serielle oder die parallele Schnittstelle zu verbinden. Zusätzlich oder alternativ können beliebige andere Schnittstellen vorgesehen sein, wie zum Beispiel eine USB-Schnittstelle und/oder eine IrDA-Schnittstelle und/oder eine Bluetooth-Schnittstelle und/oder eine UART-Schnittstelle. Weist die Überbrückungsvorrichtung mehrere Schnittstellen und mehrere Anschlusseinrichtungen auf, ist es möglich, mittels einer einzigen Überbrückungsvorrichtung eine Mehrzahl von Teilabschnitten mehrerer Kommunikationswege einzurichten, wobei ein jeweiliger Kommunikationsweg von der Antennenbuchse eines jeweiligen Mobilfunkendgeräts, die jeweilige Anschlusseinrichtung, die jeweilige Schnittstelle, einen jeweiligen Computer, das Internet sowie einen jeweiligen Server zu dem Kommunikationsnetz verläuft. Darüber hinaus sind ganz allgemein beliebige Kombinationen einzelner Verbindungen möglich, bei denen sich zwei oder mehrere der Kommunikationswege überschneiden und/oder überlappen und über dieselbe Anschlusseinrichtung und/oder dieselbe Schnittstelle verlaufen.

Bevorzugt weist die Überbrückungsvorrichtung einen modularen Aufbau auf, bei dem die Anschlusseinrichtung beispielsweise von den übrigen Teilen der Überbrückungsvorrichtung abgetrennt werden kann, um das Anschließen derselben an das Mobilfunkendgerät zu erleichtern. Ein modularer Aufbau der Überbrückungsvorrichtung begünstigt ferner die Anpassung derselben an unterschiedliche Typen von Mobilfunkendgeräten und insbesondere an unterschiedlich ausgeführte Mobilfunkendgeräte verschiedener Hersteller. So weisen verschiedene Mobilfunkendgerättypen in der Regel unterschiedliche Geräteschnittstellen oder verschieden ausgebildete Antennenbuchsen auf. Je nach Typ des anzuschließenden Mobilfunkendgeräts lassen sich bei modular aufgebauten Überbrückungsvorrichtungen beispielsweise die Kopplungseinrichtung, die komplette Anschlusseinrichtung, die Anschlussklemme oder der Antennenstecker durch jeweilige geeignete Module austauschen.

Bei einer Ausführungsform der Überbrückungsvorrichtung ist diese wenigstens teilweise in den Computer integriert ausgebildet. Beispielsweise kann der Computer eine die Überbrückungsvorrichtung aufnehmende und an deren äußere Form angepasste Ausnehmung aufweisen. In einem solchen Fall kann die Überbrückungsvorrichtung beliebig in die Ausnehmung eingesetzt oder daraus entnommen werden, so dass in diesem Fall Überbrückungsvorrichtung und Computer voneinander trennbar ausgebildet sind. Mittels einer derartigen Ausführung lässt sich ein kompaktes und bequem handhabbares System aus Überbrückungsvorrichtung und Computer realisieren. In anderen Ausführungsformen sind einzelne Teile der Überbrückungsvorrichtung untrennbar in den Computer integriert. So kann zum Beispiel die Steuereinheit statt in der Überbrückungsvorrichtung innerhalb des Computers angeordnet sein. Bei einer weiteren Ausführungsform sind alle Teile der Überbrückungsvorrichtung mit Ausnahme der Anschlusseinrichtung in den Computer integriert und untrennbar mit diesem verbunden, während die Anschlusseinrichtung als modularer Bestandteil der Überbrückungsvorrichtung von den anderen Teilen der Überbrükkungsvorrichtung und damit auch von dem Computer getrennt werden kann. Schließlich ist gemäß einer anderen Ausführungsform die Überbrückungsvorrichtung vollständig in den Computer integriert, so dass Computer und Überbrückungsvorrichtung voneinander untrennbar ausgebildet sind. In diesem Fall ist auch die Anschlusseinrichtung nicht mehr von der Überbrückungsvorrichtung trennbar und das Mobilfunkendgerät wird am Standort des Computers an die Anschlusseinrichtung angeschlossen.

Für den Computer kann ein beliebiger Internetzugang vorgesehen sein, wie zum Beispiel ein Internetzugang über ein lokales analoges Telefonnetz oder ein ISDN-Telefonnetz oder einen ADSL-Anschluss oder ein Kabelmodem oder WLAN.

Ferner kann es sich bei dem Computer um einen beliebigen Computer handeln. Vorzugsweise handelt es sich bei dem Computer aber um einen Einzelplatzrechner oder Personal Computer bzw. PC, oder um einen tragbare Computer wie zum Beispiel ein Notebook oder ein Laptop.

Vorteilhafterweise ist die Überbrückungsvorrichtung mittels einer Software steuerbar,
wobei wenigstens Teile der Software auf dem Computer und/oder auf der Überbrükkungsvorrichtung gespeichert sind. Es ist auch möglich, die Software vollständig in dem Computer zu speichern oder vollständig in der Überbrückungsvorrichtung, beispielsweise auf der Steuereinheit derselben, zu speichern.

Um einen unbefugten Zugriff auf das Kommunikationsnetz zu vermeiden, kann das erfindungsgemäße Verfahren einen Schritt des Authentifizierens der Überbrükkungsvorrichtung umfassen. Bei einer mit einer Software ausgestatteten Überbrükkungsvorrichtung kann eine solche Authentifizierung der Überbrückungsvorrichtung beim Server wenigstens teilweise mittels der Software steuerbar sein. Die Authentifizierung kann mittels eines beliebigen Verfahrens erfolgen, wie zum Beispiel mittels eines der Überbrückungsvorrichtung zugewiesenen geheimen Schlüssels oder Identifizierungscodes, von dem jeweils eine Kopie in der Überbrückungsvorrichtung und im Server des Kommunikationsnetzes abgelegt sein kann, und bzw. oder mittels eines Algorithmus, bei dem Zufallszahlen gebildet werden.

Bevorzugt ist bei einer mit einer Software ausgestatteten Überbrückungsvorrichtung die Kommunikation des Mobilfunkendgeräts und des Kommunikationsnetzes wenigstens teilweise mittels der Software steuerbar. Dabei kann die Überbrückungsvorrichtung zur sicheren Übertragung von Daten mittels eines SSL-Netzwerkprotokolls und/oder zur Datenübertragung mittels des TCP-Protokolls oder UDP-Protokolls eingerichtet sein.

Ebenfalls bevorzugt ist bei einer mit einer Software ausgestatteten Überbrückungsvorrichtung das Erfassen von am Ort des Mobilfunkendgeräts und/oder der Überbrückungsvorrichtung in Benutzung befindlichen Funkfrequenzen mittels der Software steuerbar und die Sender-/Empfängereinrichtung und/oder das Mobilfunkendgerät sind ferner von der Software zur Nutzung einer am Ort des Mobilfunkendgeräts und/oder der Überbrückungsvorrichtung ungenutzten Funkfrequenz für die Kommunikationsverbindung ansteuerbar. Bei einer vorteilhaften Ausführungsform der Überbrückungsvorrichtung ist dieselbe bei Einschalten des Mobilfunkendgeräts zum einmaligen Erfassen von am Ort des Mobilfunkendgeräts und/oder der Überbrückungsvorrichtung in Benutzung befindlichen Funkfrequenzen und/oder bei getrennter oder bestehender Kommunikationsverbindung zum wiederholten Erfassen von am Ort des Mobilfunkendgeräts und/oder der Überbrückungsvorrichtung in Benutzung befindlichen Funkfrequenzen eingerichtet. Mit dem Erfassen der am Ort des Mobilfunkendgeräts und/oder der Überbrückungsvorrichtung in Benutzung befindlichen Frequenzen lässt sich für die Kommunikationverbindung eine Frequenz wählen und verwenden, die sich von den am Ort des Mobilfunkendgeräts und/oder der Überbrückungsvorrichtung in Benutzung befindlichen Funkfrequenzen unterscheidet, um damit störende Wechselwirkungen zu vermeiden. Beim einmaligen Erfassen der am Ort des Mobilfunkendgeräts und/oder der Überbrückungsvorrichtung in Benutzung befindlichen Frequenzen bei Einschalten des Mobilfunkendgeräts lässt sich eine solche unbenutzte Frequenz schon vor Herstellen der Kommunikationsverbindung wählen. Wird das Erfassen dagegen wiederholt ausgeführt, kann auf Änderungen der am Ort des Mobilfunkendgeräts und/oder der Überbrückungsvorrichtung in Benutzung befindlichen Frequenzen während der bestehenden Kommunikationsverbindung flexibel reagiert werden und die für die Kommunikationsverbindung benutzte Frequenz kann entsprechend permanent neu angepasst werden.

In bekannten Kommunikationsnetzen werden für die Kommunikation über die Luftschnittstelle Zeitschlitze eingerichtet. Zur Übertragung von Nutzdaten oder Signalisierungsdaten ist es bekannt, diese Zeitschlitze in logische Kanäle einzuteilen. Einer dieser Kanäle ist der Slow Associated Control Channel oder SACCH-Kanal, der zum ständigen Senden von Messergebnissen von Signalpegelmessungen derjenigen Zelle, in der sich das Mobilfunkendgerät gerade befindet, sowie deren Nachbarzellen an das Kommunikationsnetz vorgesehen ist. Ein weiterer Kanal ist der Broadcast Common Control Channel oder BCCH-Kanal, über den Systeminformationen übertragen werden, über die alle am Netzwerk angemeldeten aber nicht aktiven Mobilfunkendgeräte stets informiert sein müssen. Beispielsweise werden einem Mobilfunkendgerät über den BCCH-Kanal jeder Zelle die verwendeten Frequenzen der Nachbarzellen ausgestrahlt, um dem Mobilfunkendgerät ein Durchsuchen des kompletten Frequenzbandes nach Nachbarzellen zu ersparen. Gemäß einer Ausführungsform der Erfindung wird durch Konfiguration des BCCH-Kanals und/oder des SACCH-Kanals die Sendeleistung des Mobilfunkendgeräts gesteuert, wofür die Überbrückungsvorrichtung beispielsweise entsprechend eingerichtet sein kann. So lässt sich beispielsweise durch eine derartige Konfiguration die Emission von Funkwellen durch die Antenne des Mobilfunkendgeräts zumindest dann unterbinden, wenn das Mobilfunkendgerät und das Kommunikationsnetz miteinander kommunizieren.

Ein Kommunikationsnetz, bei dem eine Kommunikationsverbindung zwischen dem Kommunikationsnetz und einem Mobilfunkendgerät mittels einer Überbrückungsvorrichtung herstellbar ist, weist wenigstens einen Server auf, der wenigstens zum teilweisen Herstellen der Kommunikationsverbindung zwischen wenigstens einem Mobilfunkendgerät und dem Kommunikationsnetz auf einem Kommunikationsweg vorgesehen ist, welcher einen mit der Überbrückungsvorrichtung eingerichteten Teilabschnitt aufweist.

Bevorzugt umfasst der Server eine Authentisierungszentrale und ist eingerichtet, bei fehlgeschlagener Authentisierung der Überbrückungsvorrichtung die Herstellung der Kommunikationsverbindung zu unterbinden. Damit lassen sich ein unbefugter Zugriff sowie eine unbefugte Nutzung des Kommunikationsnetzes verhindern.

Der Server kann auf einer beliebigen Hardware implementiert sein. Bevorzugt ist der Server jedoch auf einer redundanten Unix- oder Linux-Maschine oder einem skalierbaren Unix- oder Linux-Cluster implementiert.

Das Kommunikationsnetz kann ein leitungsvermittelndes Kommunikationsnetz oder ein mittels paketorientierter Datenübertragung arbeitendes Kommunikationsnetz sein. Bei einem leitungsvermittelnden-Kommunikationsnetz wird beim Herstellen der Kommunikationsverbindung eine Leitung direkt von Teilnehmer zu Teilnehmer geschaltet, die diese während des Bestehens der Kommunikationsverbindung ausschließlich für sich verwenden können. Im Falle eines leitungsvermittelnden Kommunikationsnetzes lässt sich der Kommunikationsweg über die vermittelte Leitung durch das Kommunikationsnetz zu einem weiteren Endgerät verlängern. Arbeitet das Kommunikationsnetz mittels paketorientierter Datenübertragung, so werden einzelne Datenpakete nacheinander über einen Übertragungskanal übertragen, wobei jeweils nur ein Teilnehmer senden oder empfangen kann. Der Vorteil einer paketorientierten Datenübertragung gegenüber einer leitungsvermittelnden Arbeitsweise ist die schnellere Übertragung der Daten, da für die Datenpakete die Bandbreite des gesamten Übertragungskanals zur Verfügung steht.

Bevorzugt ist das Kommunikationsnetz Teil eines mobilen Kommunikationssystems. Insbesondere kann das Kommunikationsnetz wenigstens einen Teil des Kernnetzes des mobilen Kommunikationssystems bilden. Das Kommunikationsnetz kann aber auch mit wenigstens einem Teil des Kernnetzes oder dem gesamten Kernnetz des mobilen Kommunikationssystems identisch sein, so dass die BSS nicht vom Kommunikationsnetz umfasst wird. Sofern das Kommunikationsnetz Teil eines mobilen Kommunikationsnetzes ist, lässt sich der Server beispielsweise im BSS oder in einer BTS oder einem BSC des mobilen Kommunikationssystems implementieren. Ganz allgemein kann der Server aber auch in einer Mobilfunkvermittlungsstelle oder einem Mobile Switching Center bzw. MSC des Kernnetzes implementiert sein.

Bei dem Kommunikationsnetz kann es sich unter anderem um ein GSM-Netzwerk (Global System for Mobile Communication) oder ein GPRS-Netzwerk (General Pakket Radio System) oder ein GPRS-Netzwerk mit einer EDGE-Modulation (Enhanced Data Rates for GSM Evolution) oder ein UMTS-Netzwerk (Universal Mobile Telecommunication System) oder ein UMTS-Netzwerk mit einer HSDPA-Modulation (High Speed Downlink Packet Access) oder ein WLAN-Netzwerk (Wireless LAN oder Wireless Local Area Network) oder ein Bluetooth-Netzwerk handeln.

Es ist üblich, in GSM-Netzwerken die Schnittstelle zwischen BSS bzw. BSC und MSC als A-Schnittstelle zu bezeichnen. Da im Fall der vorliegenden Erfindung die Luftschnittstelle mittels der Überbrückungsvorrichtung überbrückt wird, wird der BSS zum Herstellen der Kommunikationsverbindung nicht benötigt. Sofern das mobile Kommunikationsnetz ein GSM-Netzwerk ist, verfügt es bevorzugt über eine A-Schnittstelle zwischen dem Server und einer MSC, um die gewohnte Betriebsweise des GSM-Netzwerkes ohne Modifikationen desselben zu gewährleisten. Außerdem umfasst der Server bevorzugt eine sogenannte Transcoding and Rate Adaptation Unit oder TRAU, die in bekannten Mobilfunknetzwerken eine Komprimierung und Dekomprimierung von Sprachdaten durchführt. Dabei kann die TRAU über einen oder mehrere als Sprachcodec bezeichnete Algorithmen zur Sprachkomprimierung wie zum Beispiel einen Full Rate Codec oder FR, einen Enhanced Full Rate Codec oder EFR, einen Half Rate Codec oder HR oder einen Adaptive Multi Rate Algorithmus oder AMR verfügen.

Als Gegenstück zur MSC in leitungsvermittelnden GSM-Netzwerken weisen paketorientierte GPRS-Netzwerke einen sogenannten Serving GPRS Support Node oder SGSN auf. Ferner weisen GPRS-Netzwerke eine sogenannte Packet Control Unit oder PCU auf, die das paketvermittelnde Gegenstück zur BSC im Radionetzwerk darstellt. Somit ist es für den Fall, dass das mobile Kommunikationsnetz ein GPRS-Netzwerk oder ein GPRS-Netzwerk mit einer EDGE-Modulation ist, bevorzugt, wenn es über eine Gb-Schnittstelle zwischen dem Server und einer SGSN verfügt. Um paketorientierte Datenübertragung zu ermöglichen, kann statt eine PCU außerhalb des Servers vorzusehen eine solche auch in den Server selbst implementiert werden, so dass der Server die PCU umfasst.

Ferner sind aus bekannten Kommunikationsnetzen sogenannte Visitor Location Register oder VLR-Datenbanken und Home Location Register oder HLR-Datenbanken für die Teilnehmerverwaltung bekannt. Zur Verwaltung von mehreren Überbrükkungsvorrichtungen werden entsprechend bevorzugt virtuelle VLR und/oder HLR für den Server vorgesehen. Diese werden hier als virtuell bezeichnet, weil die Kommunikationsverbindung erfindungsgemäß unabhängig vom Standort der Überbrükkungsvorrichtung herstellbar ist und es sich somit um keine VLR-Datenbanken oder HLR-Datenbanken im herkömmlichen Sinne handelt, die Standortdaten verwalten.

Bei bekannten Kommunikationsnetzen ist jeder Zelle ein sogenannter Location Area Code oder LAC zugewiesen, der Auskunft über den aktuellen Standort einer Mobilfunkendgerätes gibt. Die LAC sind auch den Mobilfunkvermittlungsstellen oder MSC des Kommunikationsnetzes bekannt. Da eine erfindungsgemäße Überbrückungsvorrichtung im allgemeinen auch außerhalb der Zellen eines Kommunikationsnetzes einsetzbar ist, ist für eine Überbrückungsvorrichtung ein LAC strenggenommen nicht notwendig. Es genügt, jeder Überbrückungsvorrichtung einen spezifischen Identifikationscode zuzuweisen und den MSC Informationen über die Identifikationscodes aller Überbrückungsvorrichtungen zur Verfügung zu stellen. In der Praxis ist dies allerdings umständlich, da die MSC dadurch stark belastet werden und entsprechend abgeändert werden müssen, um eine Kommunikation von Teilnehmern über das Kommunikationsnetz zu vermitteln, denen kein LAC zugewiesen ist. Um die MSC zu entlasten sowie größere Modifikationen des Kommunikationsnetzes zu vermeiden, ist es von Vorteil, für die MSC besondere LAC vorzusehen, wobei jedem dieser besonderen LAC die Identifikationscodes einer Mehrzahl von Überbrückungsvorrichtungen zugeordnet sind. In einem solchen Fall wandelt der Server vorteilhaft einen Identifikationscode der Überbrückungsvorrichtung in einen der Mobilfunkvermittlungsstelle bekannten LAC um. Auf diese Weise kann eine Kommunikationsverbindung zwischen einem Mobilfunkendgerät und einem Kommunikationsnetz hergestellt werden, ohne dass Modifikationen des Kommunikationsnetzes notwendig wären oder das Kommunikationsnetz dadurch außergewöhnlich stark belastet würde.

Bei einer bevorzugten Ausführungsform ist der Server für eine Nutzung eines Internettelephoniedienstes wie zum Beispiel Skype vorgesehen. Eine solche Ausführung erlaubt es einem Mobilfunkendgerätnutzer mittels der Überbrückungsstation und dem Server des Kommunikationsnetzes über das Internet mit einem anderen Gesprächsteilnehmer zu kommunizieren, ohne dabei das eigentliche Kommunikationsnetz mit Ausnahme des Servers zu beanspruchen.

Nachfolgend wird die vorliegende Erfindung anhand von Ausführungsbeispielen unter Bezugnahme auf Figuren näher erläutert. Es zeigen:
- Figur 1:: ein mittels einer Überbrückungsvorrichtung gemäß der vorliegenden Erfindung mit einem mobilen Kommunikationssystem verbundenes Mobilfunkendgerät dar;
- Figur 2:: eine schematische Darstellung der Überbrückungsvorrichtung;
- Figur 3:: ein Flussdiagramm, das den Ablauf des Herstellens einer Kommunikationsverbindung zwischen Mobilfunkendgerät und Kommunikationsnetz darstellt;
- Figur 4:: das mobile Kommunikationssystem nach Figur 1 mit verschiedenen Endgeräten, mit denen das nach Figur 1 mit dem mobilen Kommunikationssystem verbundene Mobilfunkendgerät verbindbar ist.

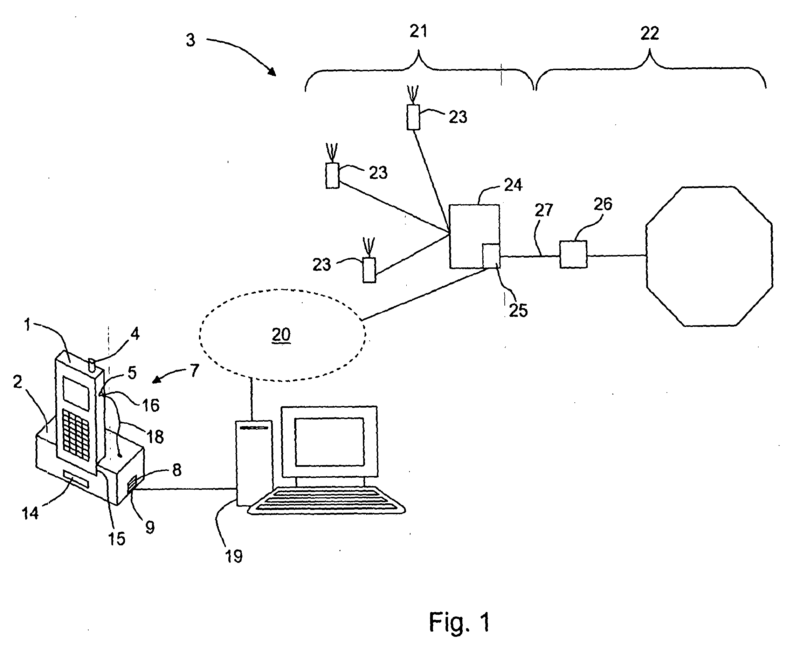

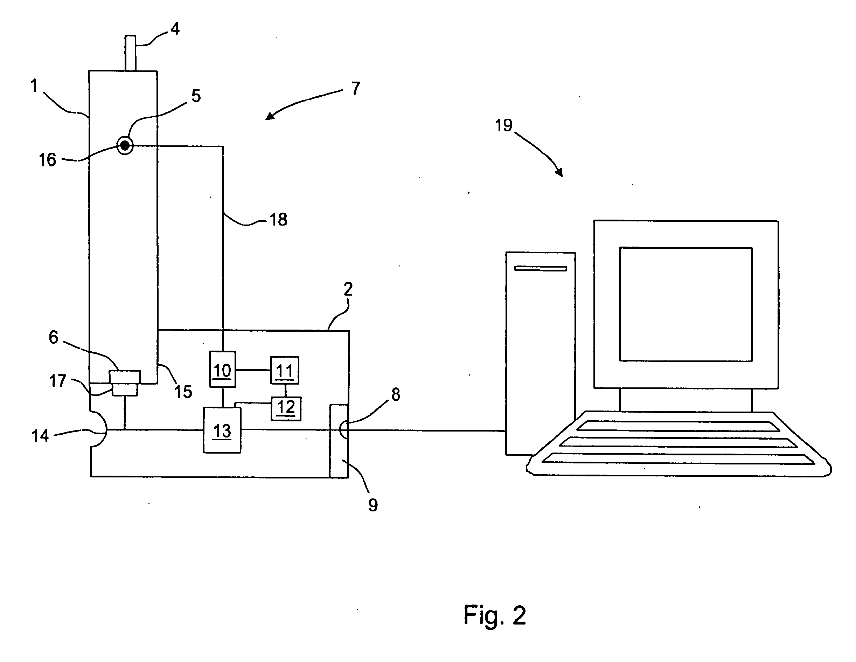

In Figur 1 ist ein Mobilfunkendgerät 1 dargestellt, das mittels einer Überbrückungsvorrichtung 2 gemäß der vorliegenden Erfindung mit einem Kommunikationsnetz 3 verbunden ist. Mobilfunkendgerät 1 und Überbrückungsvorrichtung 2 sind in Figur 2 vergrößert und detaillierter dargestellt.

Das Mobilfunkendgerät 1 weist eine Antenne 4, eine-Antennenbuchse 5 sowie eine Geräteschnittstelle 6 auf. Über die Geräteschnittstelle 6 können ein oder mehrere nicht gezeigte Zusatzgeräte an das Mobilfunkendgerät 1 gekoppelt werden, bei denen es sich zum Beispiel um ein Ladegerät oder einen Netzadapter zur Stromversorgung des Mobilfunkendgeräts 1 oder einen Kopfhörer oder eine Freisprecheinrichtung handeln kann.

Zur Überbrückungsvorrichtung 2, die nachfolgend als Dockingstation bezeichnet wird, gehören eine Anschlusseinrichtung 7, eine Schnittstelle 8 mit einem Splitter 9, eine Sender-/Empfängereinrichtung 10, ein Analog/Digitalwandler bzw. ein Digital/Analogwandler 11, ein DSP 12, eine Steuereinheit 13 und eine Kopplungseinrichtung 14. Dabei umfasst die Anschlusseinrichtung 7 eine Ausnehmung 15 zum Aufnehmen des Mobilfunkendgeräts 1, einen Antennenstecker 16, eine Anschlussklemme 17 und ein Kabel 18, wobei der Antennenstecker 16 am Ende des frei beweglichen Kabels 18 vorgesehen ist und die Anschlussklemme 17 innerhalb der Ausnehmung 15 angeordnet ist. Um eine eventuelle Belastung von Luftschnittstellen zu vermeiden, wird für das Kabel 18 ein abgeschirmtes Hochfrequenzkabel oder Antennenkabel gewählt. Über das Kabel 18 ist der Antennenstecker 16 mit der Sender-/Empfängereinrichtung 10 verbunden, die wiederum mit dem Analog/Digitalwandler bzw. Digital/Analogwandler 11 und der Steuereinheit 13 verbunden ist. Die Anschlussklemme 17 ist mit der Kopplungseinrichtung 14 und der Steuereinheit 13 verbunden. Weil die Steuereinheit 13 ihrerseits mit dem DSP 12 und der Schnittstelle 8 verbunden ist, stehen Kopplungseinrichtung 14 und Anschlussklemme 17 über die Steuereinheit 13 indirekt ebenfalls mit der Schnittstelle 8 in Verbindung. Die Schnittstelle 8 umfasst dabei den Splitter 9. Ferner ist der DSP 12 außer mit der Steuereinheit 13 auch mit dem Analog/Digitalwandler bzw. Digital/Analogwandler 11 verbunden. Schließlich besteht über die Schnittstelle 8 eine Verbindung zwischen der Dockingstation 2 und einem internetfähigen Computer 19, über die Daten beziehungsweise Signale bidirektional in beiden Richtungen übertragen werden können. Wie in Figur 1 dargestellt, steht der Computer 19 mit dem Internet 20 in Verbindung, mit dem auch das Kommunikationsnetz 3 verbunden ist.

Bei dem Kommunikationsnetz 3 handelt es sich um ein mobiles Kommunikationssystem, genauer um ein GSM-Netz. Dementsprechend umfasst das Kommunikationsnetz 3 einen BSS 21 und ein Kernnetz 22. Vom BSS 21 ist in Figur 1 aus Übersichtlichkeitsgründen lediglich ein Teil exemplarisch dargestellt, wobei mehrere BTS 23, ein BSC 24 und ein Server 25 zu sehen sind. Da der Server 25 bei der dargestellten Ausführung Teil des BSS 21 ist, wird er nachfolgend auch als BSS Server 25 bezeichnet. Gemäß der Figur 1 wird eine Mehrzahl von BTS 23 von einer BSC 24 verwaltet. Neben den in Figur 1 sichtbaren BTS 23 und dem BSC 24 sowie dem BSS Server 25 umfasst der BSS 21 eine Mehrzahl weiterer entsprechender Anordnungen mit einer Mehrzahl an BTS 23, einem diese verwaltenden BSC 24 und einem BSS Server 25. Vom an sich bekannten Kernnetz 22 des Kommunikationsnetzes 3 ist in Figur 1 aus Gründen der Übersichtlichkeit lediglich eine MSC 26 hervorgehoben, obwohl das Kommunikationsnetz 3 selbstverständlich mehrere solcher MSC 26 aufweist bzw. beliebig viele solcher MSC 26 aufweisen kann. MSC 26 und BSS Server 25 sind über eine A-Schnittstelle 27 miteinander verbunden.

Alternativ könnte es sich bei dem Kommunikationsnetz 3 beispielsweise auch um ein GPRS-Netz handeln. In diesem Falle würde eine SGSN die MSC 26 ersetzen und die A-Schnittstelle wäre eine Gb-Schnittstelle.

In den Figuren 1 und 2 list das Mobilfunkendgerät 1 mit der Anschlusseinrichtung 7 der Dockingstation 2 verbunden dargestellt. Hierfür ist das Mobilfunkendgerät 1 in der Ausnehmung 15 aufgenommen, so dass die Anschlussklemme 17 mit der Geräteschnittstelle 6 verbunden ist und die Geräteschnittstelle 6 dadurch mit der Kopplungseinrichtung 14 sowie über die Steuereinheit 13 mit der Schnittstelle 8 verbunden ist. Weil die Geräteschnittstelle 6 mit der Kopplungseinrichtung 14 verbunden ist, lassen sich Zusatzgeräte, die zum Koppeln an die Geräteschnittstelle 6 vorgesehen sind, statt an die Geräteschnittstelle 6 mit gleicher Wirkung an die Kopplungseinrichtung 14 koppeln. Des Weiteren ist der Antennenstecker 16 in die Antennenbuchse 5 des Mobilfunkendgeräts 1 gesteckt. Sofern die Schnittstelle 8 wie in Figur 2 gezeigt mit dem internetfähigen Computer 19 verbunden ist, wird mit Einstecken des Antennensteckers 16 in die Antennenbuchse 5 ein bislang noch offener Kommunikationsweg vom Mobilfunkendgerät 1 über dessen Antennenbuchse 5, die Anschlusseinrichtung 7, die Schnittstelle 8, den Computer 19, das Internet 20 sowie den BSS Server 25 zu dem Kommunikationsnetz 3 errichtet, entlang dem bei Verbinden des Computers 19 und des Servers 25 über das Internet 20 eine Kommunikationsverbindung zwischen dem Mobilfunkendgerät 1 und dem Kommunikationsnetz 3 herstellbar ist, die eine Kommunikation zwischen dem Mobilfunkendgerät 1 und dem Kommunikationsnetz 3 ermöglicht. Die Dockingstation 2 dient dabei dem Errichten eines Teilabschnitts dieses Kommunikationsweges, der sich von der Antennenbuchse 5 zum Computer 19 erstreckt.

Gesteuert wird die Herstellung der Kommunikationsverbindung zwischen dem Mobilfunkendgerät 1 und dem Kommunikationsnetz 3 einerseits von einer Software, die in dem Computer 19 gespeichert ist, und andererseits im BSS Server 25. Zur Steuerung kommuniziert die Software über die Schnittstelle 8 mit der Steuereinheit 13 der Dockingstation 2 und veranlasst diese, notwendige Steuerbefehle an die übrigen Komponenten der Dockingstation 2 auszugeben. Ferner ist die Software nach Verbinden der Schnittstelle 8 mit dem Computer 19 in der Lage, einen Betrieb des an die Anschlusseinrichtung 7 angeschlossenen Mobilfunkendgeräts 1 sowie den Betrieb von an der Kopplungseinrichtung 17 angeschlossenen Zusatzgeräten auch dann zu steuern, wenn keine Kommunikationsverbindung zwischen Mobilfunkendgerät 1 und Kommunikationsnetz 3 hergestellt ist.

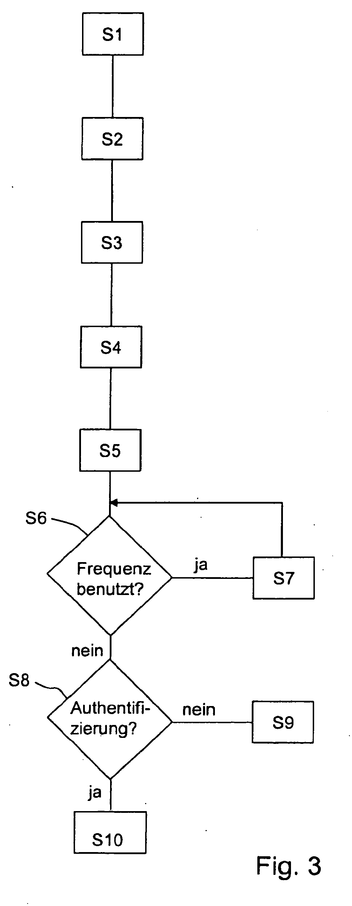

In Figur 3 ist ein Flussdiagramm gezeigt, das den Ablauf des Herstellens einer Kommunikationsverbindung zwischen Mobilfunkendgerät 1 und Kommunikationsnetz 3 darstellt. Demnach wird in Schritt S1 zunächst die Anschlusseinrichtung 7 der Dokkingstation 2 an die Antennenbuchse 5 des Mobilfunkendgeräts 1 angeschlossen, was im vorliegenden Fall auch das Anschließen der Anschlussklemme 17 an die Geräteschnittstelle 6 beinhaltet. Sodann wird im Schritt S2 die Dockingstation 2 mit dem internetfähigen Computer 19 verbunden. Somit ist ein von der Antennenbuchse 5 des Mobilfunkendgeräts 1 zum Computer 19 reichender Teilabschnitt des Kommunikationsweges eingerichtet, und es wird ein bislang noch offener Kommunikationsweg zwischen Mobilfunkendgerät 1 und Kommunikationsnetz 3 eröffnet.

Im nachfolgenden Schritt S3 wird der Kommunikationsweg vollständig errichtet, indem der offene Kommunikationsweg durch Verbindungsaufnahme zwischen dem Computer 19 und dem Server 25 über das Internet 20 geschlossen wird. Außerdem wird in einem Schritt S4 die Emission von Funkwellen durch die Antenne des Mobilfunkendgeräts mit Errichtung des Kommunikationswegs unterbunden. Dies geschieht auf bekannte Weise durch Ansteuern des Mobilfunkendgeräts 1 über die Software, die Steuereinheit 13 und den Antennenstecker 16 analog wie bei bekannten Freisprecheinrichtungen, insbesondere wie bei bekannten KFz-Freisprecheinrichtungen.

Im Schritt S5 werden von der Sender-/Empfängereinrichtung 10 am Ort des Mobilfunkendgeräts 1 und der Dockingstation 2 in Benutzung befindliche Funkfrequenzen gemessen. Für die Kommunikation ist beim vorliegenden Ausführungsbeispiel die Benutzung einer Frequenz des 1800 MHz Bandes voreingestellt, weil in diesem Bereich Mobilfunkendgeräte laut Standard schon mit einer geringeren Signalstärke arbeiten. Sofern am Ort des Mobilfunkendgeräts 1 und der Dockingstation 2 Funkfrequenzen benutzt werden, die sich innerhalb eines vorgegebenen Bereichs um die voreingestellte Frequenz des 1800 MHz Bandes befinden, besteht die Gefahr von störenden Interferenzeffekten. Aus diesem Grund erfolgt im Schritt S6 eine Abfrage, bei der geklärt wird, ob dies der Fall ist oder nicht. Falls tatsächlich Funkfrequenzen am Ort des Mobilfunkendgeräts 1 und der Dockingstation 2 benutzt werden, die in den vorgegebenen Bereich fallen, wird im Schritt S7 die voreingestellte Frequenz des 1800 MHz Bandes auf eine Frequenz abgeändert, die ausreichend verschieden ist von den am Ort des Mobilfunkendgeräts 1 und der Dockingstation 2 benutzten Frequenzen. Anschließend wird der Schritt S6 wiederholt.

Werden im Schritt S6 keine derartigen Frequenzen am Ort des Mobilfunkendgeräts 1 und der Dockingstation 2 festgestellt, so fährt das Verfahren mit dem Schritt S8 fort, in welchem eine Authentifizierung der Dockingstation 2 beim Server 25 erfolgt. Die. Authentifizierung kann mittels eines beliebigen Verfahrens erfolgen. Beispielsweise kann die Dockingstation 2 über einen geheimen ihr zugewiesenen Schlüssel oder Identifizierungscode verfügen, von dem jeweils eine Kopie in der Dockingstation 2 und im Server 25 abgelegt sein können. Ferner kann die Authentifizierung unter Zuhilfenahme eines Algorithmus erfolgen, bei dem Zufallszahlen gebildet werden.

Schlägt die Authentifizierung im Schritt S8 fehl, wird vom Server 25 die Herstellung der Kommunikationsverbindung unterbunden und das Verfahren endet mit Schritt S9. Fällt die Authentifizierung dagegen positiv aus, endet das Verfahren mit Schritt S10, in dem die Kommunikationsverbindung hergestellt ist und Mobilfunkendgerät 1 und Kommunikationsnetz 3 entlang des Kommunikationsweges miteinander kommunizieren.

Beim Kommunizieren erfolgt in der Dockingstation 2 eine Verarbeitung vom Mobilfunkgerät 1 ausgehender Signale. So werden, von der Steuereinheit 13 bzw. der Software gesteuert, Frequenzen von Signalen des Mobilfunkendgeräts 1, die von der Sender-/Empfängereinrichtung 10 empfangen werden, erniedrigt und die Signale in Signale niedrigerer Frequenz gewandelt. Sodann erfolgt eine Umwandlung der analogen Signale in digitale Signale im Analog/Digitalwandler bzw. Digital/Analogwandler 11. Schließlich werden die digitalisierten Signale vom DSP 12 komprimiert, bevor sie über die Schnittstelle 8 an den Computer 19 ausgegeben werden.

Im umgekehrten Fall werden vom Kommunikationsnetz 3 über die Schnittstelle 8 eintreffende komprimierte digitale Signale vom DSP 12 zuerst dekomprimiert und dann im Analog/Digitalwandler bzw. Digital/Analogwandler 11 in analoge Signale umgewandelt. Die Frequenz dieser Signale wird von der Sender-/Empfängereinrichtung 10 entsprechend erhöht und die Signale werden schließlich über den Antennenstecker 16 an das Mobilfunkendgerät 1 ausgegeben.

Dabei bleibt während der gesamten Kommunikation zwischen Mobilfunkendgerät 1 und Kommunikationsnetz 3 die Emission von Funkwellen durch die Antenne 4 des Mobilfunkendgeräts 1 unterbunden, d.h. das Mobilfunkendgerät 1 strahlt keine Funkwellen über die Antenne 4 aus. Infolgedessen wird keine Luftschnittstelle für die Kommunikation zwischen dem Mobilfunkendgerät 1 und dem Kommunikationsnetz 3 beansprucht, und es erfolgt keine Belastung vorliegender Luftschnittstellen.

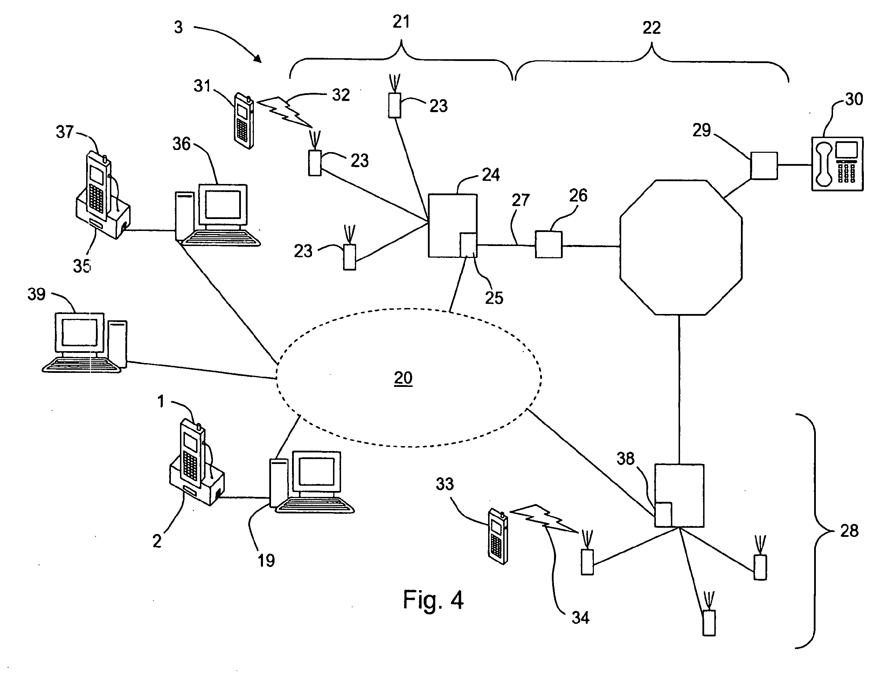

Letztendlich ist Sinn und Zweck der Kommunikation zwischen Mobilfunkendgerät 1 und Kommunikationsnetz 3, mithilfe des Kommunikationsnetzes 3 eine Verbindung zwischen dem Mobilfunkendgerät 1 und einem weiteren Endgerät herzustellen, bei dem es sich ebenfalls um ein Mobilfunkendgerät oder aber um ein an ein Festnetz angebundenes Endgerät handelt. In diesem Zusammenhang zeigt die Figur 4 mehrere Varianten für ein solches Endgerät.

Dargestellt ist in Figur 4 noch einmal das mittels der Dockingstation 2, dem Computer 19 und dem Internet 20 auf dem oben erläuterten Kommunikationsweg mit dem Kommunikationsnetz 3 verbundene Mobilfunkendgerät 1. Die Komponenten des Kommunikationsnetzes 3 wurden oben in Verbindung mit der Figur 1 erläutert. Im Unterschied zur Figur 1 sind in Figur 4 ein weiterer Teil des BSS 28 sowie eine weitere MSC 29 des Kommunikationsnetzes 3 zu sehen. Mit der MSC 29 ist ein Festnetzendgerät 30 verbunden. Auf weitere in Figur 4 dargestellte Endgeräte wird weiter unten an gegebener Stelle näher eingegangen.

Um eine Gesprächsverbindung zwischen dem Mobilfunkendgerät 1 und dem Festnetzendgerät 30 herzustellen, wird wie oben erläutert zunächst eine Kommunikationsverbindung zwischen dem Mobilfunkendgerät 1 und dem Kommunikationsnetz 3 hergestellt. Über diese Kommunikationsverbindung kommuniziert das Mobilfunkendgerät 1 mit dem Kommunikationsnetz 3, um dieses zur Herstellung einer Gesprächsverbindung mit dem Festnetzendgerät 30 zu veranlassen, wozu der BSS Server 25 über die A-Schnittstelle 27 mit der MSC 26 kommuniziert und diese wiederum mit der MSC 29.

Zum Vergleich ist in Figur 4 ein weiteres Mobilfunkendgerät 31 gezeigt, das auf herkömmliche Art über eine Luftschnittstelle 32 mit einer BTS 23 des BSS 21 zur Herstellung einer Gesprächsverbindung mit dem Festnetzendgerät 30 mit dem Kommunikationsnetz 3 kommuniziert, wozu der BSC 24 über die A-Schnittstelle 27 mit der MSC 26 kommuniziert. Insofern besteht für das Kernnetz 22 des Kommunikationsnetzes 3 zwischen beiden Fällen keinerlei Unterschied, und es spielt für den Betrieb des Kernnetzes 22 keine Rolle, ob eine Gesprächsverbindung zwischen dem Mobilfunkendgerät 1 und dem Festnetzendgerät 30 hergestellt werden soll oder ob eine Gesprächsverbindung zwischen dem Mobilfunkendgerät 31 und dem Festnetzendgerät 30 hergestellt werden soll.

Der Grund hierfür liegt darin, dass in beiden Fällen das Kernnetz 22 über die A-Schnittstelle 27 kommuniziert, so dass dem Kernnetz 22 eine Kommunikation mit dem Mobilfunkendgerät 1 analog wie eine Kommunikation mit dem über die Luftschnittstelle 32 mit dem Kommunikationsnetz 3 verbundenen Mobilfunkendgerät 31 erscheint. Bei der Herstellung einer Gesprächsverbindung zwischen Mobilfunkendgerät 1 und Festnetzendgerät 30 ist der Betrieb des Kernnetzes 22 demnach gleich wie beim Herstellen einer Gesprächsverbindung zwischen Mobilfunkendgerät 31 und Festnetzendgerät 30. Folglich ist auch der Betrieb des Kernnetzes 22 bei Herstellen einer Gesprächsverbindung zwischen dem Mobilfunkendgerät 1 mit dem über eine Luftschnittstelle 32 mit dem Kommunikationsnetz 3 kommunizierenden Mobilfunkendgerät 31 unabhängig davon, ob das Mobilfunkendgerät 1 wie in Figur 4 dargestellt über die Dockingstation 2 mit dem Kommunikationsnetz 3 kommuniziert oder wie das Mobilfunkendgerät 31 über eine Luftschnittstelle 32. Dasselbe trifft für das Herstellen einer Gesprächsverbindung zwischen dem Mobilfunkendgerät 1 mit einem weiteren in Figur 4 gezeigten Mobilfunkendgerät 33 zu, das mit dem anderen Teil des BSS 28 über eine Luftschnittstelle 34 mit dem Kommunikationsnetz 3 kommuniziert als demjenigen Teil des BSS 21, mit dessen Server 25 das Mobilfunkendgerät 1 verbunden ist.

In Figur 4 ist zudem ein mittels einer weiteren Dockingstation 35 und eines weiteren internetfähigen Computers 36 mit dem Server 25 verbundenes Mobilfunkendgerät 37 zu sehen. Um die einzelnen Dockingstationen 2 und 35 voneinander unterscheiden zu können, ist jeder der Dockingstationen 2 und 35 ein spezifischer Identifikationscode zugewiesen, anhand dessen die jeweilige Dockingstation 2 und 35 erkannt werden kann, und der auch bei der Authentifizierung der Dockingstationen 2 und 35 herangezogen wird. Normalerweise weist ein über eine Luftschnittstelle 32, 34 mit dem Kommunikationsnetz 3 kommunizierendes Mobilfunkendgerät 31, 33 einen LAC auf, der von der jeweiligen Zelle abhängt, in der sich das Mobilfunkendgerät 31, 33 gerade befindet, und der bei der Kommunikation mit dem Kommunikationsnetz 3 an die jeweilige MSC 26 übertragen wird. Um den Betrieb des Kernnetzes 22 auch hinsichtlich der Verarbeitungsprozeduren des LAC bei Kommunikation eines mittels einer Dockingstation 2, 35 mit dem Kommunikationsnetz 3 kommunizierenden Mobilfunkendgeräts 1, 37 unverändert zu lassen und nicht weiter zu belasten, werden gewisse LAC vorgesehen, denen jeweils eine Mehrzahl an Identifikationscodes jeweiliger Dockingstationen zugewiesen werden.

Beispielsweise kann der MSC 26 ein gewisser LAC vorgegeben werden, dem die Identifikationscodes von sowohl der Dockingstation 2 als auch der Dockingstation 35 zugeordnet sind. Beim Herstellen einer Kommunikationsverbindung zwischen einem der Mobilfunkendgeräte 1 oder 37 mittels einer der Dockingstationen 2 oder 35 und dem Kommunikationsnetz 3 über den BSS Server 25, wird der Identifikationscode der jeweiligen Dockingstation 2 oder 35 vom BSS Server 25 diesem LAC zugeordnet und der LAC wird der MSC 26 übergeben. Für die MSC 26 hat es somit den Anschein, als suche ein Mobilfunkendgerät mit dieser spezifischen LAC eine Gesprächsverbindung mit einem anderen Endgerät.

Infolge der Verwendung des Internets 20 zum Herstellen der Kommunikationsverbindung ergibt sich eine weitere Besonderheit der vorliegenden Erfindung. Möchte zum Beispiel das Mobilfunkendgerät 1 eine Gesprächsverbindung mit dem Mobilfunkendgerät 37 herstellen, wobei beide Mobilfunkendgeräte 1 und 37 an jeweilige Dokkingstationen 2 und 35 angeschlossen sind, so kann dies einerseits über den BSS Server 25, das Kernnetz 22 und einen BSS Server eines anderen Teils des BSS erfolgen, beispielsweise wie in Figur 4 gezeigt über den BSS Server 38. Es ist aber auch möglich, eine Gesprächsverbindung unter Umgehung des Kernnetzes 22 herzustellen, indem der Server 25 die jeweiligen Computer 19 und 36 direkt über das Internet 20 anspricht und eine Verbindung herstellt. Hierfür nutzt der Server 25 einen integrierten virtuellen VLR/HLR. Darüber hinaus ist es für den Server 25 möglich, mittels eines Internettelefoniedienstes wie zum Beispiel Skype eine Gesprächsverbindung zwischen einem der Mobilfunkendgeräte 1 und 37 und einem in Figur 4 dargestellten und für die Internettelefonie eingerichteten Computer 39 herzustellen.

Schließlich ist es möglich, eine Gesprächsverbindung zwischen einem der Mobilfunkendgeräte 1 oder 37 und einem beliebigen Endgerät herzustellen, das mit einem anderen Kommunikationsnetz als dem Kommunikationsnetz 3 kommuniziert. Dies erfolgt durch das allgemein bekannte sogenannte Roaming, was ebenfalls dadurch ermöglicht wird, dass sich der Betrieb des Kernnetzes 22 bei Kommunikation des Kommunikationsnetzes 3 mit einem mittels einer Dockingstation 2, 35 mit diesem verbundenen Mobilfunkendgerät 1, 37 im Vergleich zu einem über eine Luftschnittstelle 32, 34 kommunizierenden Mobilfunkendgerät 31, 33 nicht ändert.

### Bezugszeichenliste

- 1: Mobilfunkendgerät
- 2: Überbrückungsvorrichtung oder Dockingstation
- 3: Kommunikationsnetz
- 4: Antenne
- 5: Antennenbuchse
- 6: Geräteschnittstelle
- 7: Anschlusseinrichtung
- 8: Schnittstelle
- 9: Splitter
- 10: Sender-/Empfängereinrichtung
- 11: Analog/Digitalwandler bzw. Digital/Analogwandler
- 12: DSP
- 13: Steuereinheit
- 14: Kopplungseinrichtung
- 15: Ausnehmung
- 16: Antennenstecker
- 17: Anschlussklemme
- 18: Kabel
- 19: Computer
- 20: Internet
- 21: BSS
- 22: Kernnetz
- 23: BTS
- 24: BSC
- 25: Server oder BSS Server
- 26: MSC
- 27: A-Schnittstelle
- 28: BSS
- 29: MSC
- 30: Festnetzendgerät
- 31: Mobilfunkendgerät
- 32: Luftschnittstelle
- 33: Mobilfunkendgerät
- 34: Luftschnittstelle
- 35: Dockingstation
- 36: Computer
- 37: Mobilfunkendgerät
- 38: BSS Server
- 39: Computer

## Patentansprüche

1. Überbrückungsvorrichtung (2, 35) zum Einrichten eines Teilabschnitts eines Kommunikationsweges zwischen wenigstens einem Mobilfunkendgerät (1, 37), das eine Antenne (4) und eine Antennenbuchse (5) aufweist, und wenigstens einem Kommunikationsnetz (3), das wenigstens einen Server (25, 38) aufweist, wobei die Überbrückungsvorrichtung (2, 35) wenigstens eine Anschlusseinrichtung (7) umfasst, die an die Antennenbuchse (5) des Mobilfunkendgeräts (1, 37) anschließbar ist, und wenigstens eine Schnittstelle (8) umfasst, mit der die Überbrückungsvorrichtung (2, 35) mit einem Computer (19, 36), welcher mit einem bi- oder multidirektionalen Netzwerk verbindbar ist, verbindbar ist, wobei bei Anschließen der Anschlusseinrichtung (7) an die Antennenbuchse (5) und bei Verbinden der Überbrückungsvorrichtung (2, 35) mit dem Computer (19, 36) entlang des vom Mobilfunkendgerät (1, 37) über dessen Antennenbuchse (5), die Anschlusseinrichtung (7), die Schnittstelle (8), den Computer (19, 36), das bi- oder multidirektionale Netzwerk (20) sowie den Server (25, 38) zu dem Kommunikationsnetz (3) verlaufenden Kommunikationsweges eine Kommunikationsverbindung herstellbar ist, die eine Kommunikation zwischen dem Mobilfunkendgerät (1, 37) und dem Kommunikationsnetz (3) ermöglicht, und wobei eine Emission von Funkwellen durch die Antenne (4) des Mobilfunkendgeräts (1, 37) zumindest dann unterbindbar ist, solange das Mobilfunkendgerät (1, 37) und das Kommunikationsnetz (3) miteinander kommunizieren.

2. Überbrückungsvorrichtung (2, 35) nach Anspruch 1, wobei die Anschlusseinwichtung (7) wenigstens einen Antennenstecker (16), der zum Anschließen der Anschlusseinrichtung (7) an die Antennenbuchse (5) des Mobilfunkendgeräts (1, 37) in die Antennenbuchse (5) steckbar ist, sowie wenigstens eine an eine Geräteschnittstelle (6) des Mobilfunkendgeräts (1, 37) anschließbare Anschlussklemme (17) umfasst.

3. Überbrückungsvorrichtung (2, 35) nach Anspruch 2, bei der mit Anschließen der Anschlussklemme (17) an die Geräteschnittstelle (6) des Mobilfunkendgeräts (1, 37) eine Verbindung zwischen der Geräteschnittstelle (6) und der Schnittstelle (8) der Überbrückungsvorrichtung (2, 35) herstellbar ist.

4. Überbrückungsvorrichtung (2, 35) nach einem der Ansprüche 2 oder 3 mit wenigstens einer Kopplungseinrichtung (14) für ein Zusatzgerät, wobei mit Anschließen der Anschlussklemme (17) an die Geräteschnittstelle (6) des Mobilfunkendgeräts (1, 37) eine Verbindung zwischen der Geräteschnittstelle (6) und der Kopplungseinrichtung (14) herstellbar ist.

5. Überbrückungsvorrichtung (2, 35) nach einem der vorhergehenden Ansprüche, bei der die Schnittstelle (8) eine Breitbandanschlusseinheit oder einen Splitter (9) umfasst.

6. Überbrückungsvorrichtung (2, 35) nach einem der vorhergehenden Ansprüche, die eine Sender-/Empfängereinrichtung (10) umfasst, die zur Erfassung einer vom Mobilfunkendgerät (1, 37) aufgebrachten Leistung und/oder von am Ort des Mobilfunkendgeräts (1, 37) und/oder der Überbrückungsvorrichtung (2, 35) in Benutzung befindlichen Funkfrequenzen eingerichtet ist.

7. Überbrückungsvorrichtung (2, 35) nach einem der vorhergehenden Ansprüche, die einen digitalen Signalprozessor oder DSP (12) und/oder einen Analog/Digitalwandler und/oder einen Digital/Analogwandler (11) und/oder eine Steuereinheit (13) umfasst.

8. Überbrückungsvorrichtung (2, 35) nach einem der vorhergehenden Ansprüche, bei der die Anschlusseinrichtung (7) an eine Mehrzahl von Mobilfunkendgeräten (1, 37) anschließbar ist und/oder die eine Mehrzahl von Schnittstellen (8) umfasst, mit denen die Überbrückungsvorrichtung (2, 35) mit jeweiligen Computern (19, 36), welche mit einem bi- oder multidirektionalen Netzwerk verbindbar sind, verbindbar ist.

9. Überbrückungsvorrichtung (2, 35) nach einem der vorhergehenden Ansprüche, wobei die Überbrückungsvorrichtung (2, 35) wenigstens teilweise in den Computer (19, 36) integriert ist, wobei die Überbrückungsvorrichtung (2, 35) und der Computer (19, 36) voneinander trennbar oder untrennbar ausgebildet sind.

10. Überbrückungsvorrichtung (2, 35) nach einem der vorhergehenden Ansprüche, die mittels einer Software steuerbar ist, wobei wenigstens Teile der Software in dem Computer (19, 36) und/oder in der Überbrückungsvorrichtung (2, 35) gespeichert sind, und/oder bei der eine Authentifizierung der Überbrückungsvorrichtung (2, 35) beim Server (25, 38) wenigstens teilweise mittels der Software steuerbar ist und/oder wobei die Kommunikation des Mobilfunkendgeräts (1, 37) und des Kommunikationsnetzes (3) wenigstens teilweise mittels der Software steuerbar ist.

11. Überbrückungsvorrichtung (2, 35) nach Anspruch 10, wobei das Erfassen von am Ort des Mobilfunkendgeräts (1, 37) und/oder der Überbrückungsvorrichtung (2, 35) in Benutzung befindlichen Funkfrequenzen mittels der Software steuerbar ist und die Sender-/Empfängereinrichtung (10) und/oder das Mobilfunkendgerät (1, 37) ferner von der Software zur Nutzung einer am Ort des Mobilfunkendgeräts (1, 37) und/oder der Überbrückungsvorrichtung (2, 35) unbenutzten Funkfrequenz für die Kommunikationsverbindung ansteuerbar sind oder ist.

12. Überbrückungsvorrichtung (2, 35) nach Anspruch 11, die bei Einschalten des Mobilfunkendgeräts (1, 37) zum einmaligen Erfassen von am Ort des Mobilfunkendgeräts (1, 37) und/oder der Überbrücküngsvorrichtung (2, 35) in Benutzung befindlichen Funkfrequenzen und/oder bei getrennter Kommunikationsverbindung zum wiederholten Erfassen von am Ort des Mobilfunkendgeräts (1, 37) und/oder der Überbrückungsvorrichtung (2, 35) in Benutzung befindlichen Funkfrequenzen eingerichtet ist.

13. Kommunikationsnetz (3) mit wenigstens einem Server (25, 38), der wenigstens zum teilweisen Herstellen einer Kommunikationsverbindung zwischen wenigstens einem Mobilfunkendgerät (1, 37) und dem Kommunikationsnetz (3) auf einem Kommunikationsweg vorgesehen ist, welcher einen mit einer Überbrückungsvorrichtung (2, 35) nach einem der Ansprüche 1 bis 12 eingerichteten Teilabschnitt aufweist.

14. Kommunikationsnetz (3) nach Anspruch 13, wobei der Server (25, 38) eine Authentisierungszentrale zur Authentisierung der Überbrückungsvorrichtung (2, 35) umfasst und eingerichtet ist, bei fehlgeschlagener Authentisierung der Überbrükkungsvorrichtung (2, 35) die Herstellung der Kommunikationsverbindung zu unterbinden.

15. Kommunikationsnetz (3) nach einem der Ansprüche 13 oder 14, wobei das Kommunikationsnetz (3) Teil eines mobilen Kommunikationssystems ist, wobei das Kommunikationsnetz (3) mit wenigstens einem Teil des Kernnetzes (22) oder dem gesamten Kernnetz (22) des mobilen Kommunikationssystems identisch ist, und wobei der Server (25, 38) im BSS (21, 28) oder in einer BSC (24) des mobilen Kommunikationssystems implementiert ist oder wobei der Server (25, 38) in einer Mobilfunkvermittlungsstelle (26, 29) des Kernnetzes (22) implementiert ist.

16. Kommunikationsnetz (3) nach Anspruch 15, wobei das mobile Kommunikationsnetz ein GSM-Netzwerk ist und über eine A-Schnittstelle (27) zwischen dem Server (25, 38) und einer MSC als Mobilfunkvermittlungsstelle (26, 29) verfügt und wobei der Server (25, 38) eine TRAU umfasst, oder wobei das mobile Kommunikationsnetz ein GPRS-Netzwerk oder ein GPRS-Netzwerk mit einer EDGE-Modulation ist und über eine Gb-Schnittstelle zwischen dem Server und einer SGSN als Mobilfunkvermittlungsstelle verfügt, wobei der Server eine PCU und/oder ein virtuelles VLR und/oder HLR umfasst.

17. Kommunikationsnetz (3) nach einem der Ansprüche 15 oder 16, bei dem der Server (25, 38) einen Identifikationscode der Überbrückungsvorrichtung (2, 35) in einen der Mobilfunkvermittlungsstelle (26, 29) bekannten LAC umwandelt.

18. Kommunikationsnetz (3) nach einem der Ansprüche 13 bis 17, wobei der Server (25, 38) für eine Nutzung eines Telefondienstes über ein bi- oder multidirektionales Netzwerk, insbesondere eines Internettelefoniedienstes, vorgesehen ist.

19. Verfahren zum Herstellen einer Kommunikationsverbindung zwischen einem Mobilfunkendgerät (1, 37) und einem Kommunikationsnetz (3) nach einem der Ansprüche 13 bis 18 mittels einer Überbrückungsvorrichtung (2, 35) nach einem der Ansprüche 1 bis 12, die eine Kommunikation zwischen dem Mobilfunkendgerät (1, 37) und dem Kommunikationsnetz (3) ermöglicht, wobei das Verfahren die folgenden Schritte umfasst:
(a) Anschließen einer Anschlusseinrichtung (7) der Überbrückungsvorrichtung (2, 35) an die Antennenbuchse (5) des Mobilfunkendgeräts (1, 37);
(b) Verbinden der Überbrückungsvorrichtung (2, 35) mit dem Computer (19, 36), welcher mit einem bi- oder multidirektionalen Netzwerk verbindbar ist;
(c) Errichten eines vom Mobilfunkendgerät (1, 37) über dessen Antennenbuchse (5), die Anschlusseinrichtung (7), die Schnittstelle (8), den Computer (19, 36), das bi- oder multidirektionale Netzwerk (20) sowie den Server (25, 38) zu dem Kommunikationsnetz (3) verlaufenden Kommunikationsweges; und
(d) Unterbinden einer Emission von Funkwellen durch die Antenne (4) des Mobilfunkendgeräts (1, 37) zumindest während das Mobilfunkendgerät (1, 37) und das Kommunikationsnetz (3) miteinander kommunizieren.

20. Verfahren nach Anspruch 19, das den weiteren Schritt des Erfassens einer vom Mobilfunkendgerät (1, 37) aufgebrachten Leistung und/oder von am Ort des Mobilfunkendgeräts (1, 37) und/oder der Überbrückungsvorrichtung (2, 35) in Benutzung befindlichen Funkfrequenzen umfasst.

21. Verfahren nach Anspruch 20, bei dem für die Kommunikationsverbindung eine am Ort des Mobilfunkendgeräts (1, 37) und/oder der Überbrückungsvorrichtung (2, 35) ungenutzte Funkfrequenz verwendet wird.

22. Verfahren nach einem der Ansprüche 20 oder 21, bei dem am Ort des Mobilfunkendgeräts (1, 37) und/oder der Überbrückungsvorrichtung (2, 35) in Benutzung befindliche Funkfrequenzen einmalig bei Einschalten des Mobilfunkendgeräts (1, 37) und/oder bei getrennter oder bestehender Kommunikationsverbindung wiederholt erfasst werden.

23. Verfahren nach einem der Ansprüche 19 bis 22, bei dem die Überbrückungsvorrichtung (2, 35) beim Server (25, 38) authentifiziert wird und bei Fehlschlagen der Authentifizierung die Kommunikationsverbindung unterbunden wird.

24. Verfahren nach einem der Ansprüche 19 bis 23, bei dem eine Sendeleistung des Mobilfunkendgeräts (1, 37) durch Konfiguration des BCCH-Kanals und/oder des SACCH-Kanals gesteuert wird.

## Claims

1. Bridging device (2, 35) for setting up a section of a communication path between at least one mobile radio terminal (1, 37) comprising an antenna (4) and an antenna socket (5) and at least one communication network (3) comprising at least one server (25, 38), wherein the bridging device (2, 35) includes at least one connecting means (7) connectable to the antenna socket (5) of the mobile radio terminal (1, 37) and including at least one interface through which the bridging device (2, 35) can be connected to a computer (19, 36) which can be connected to a bidirectional or multidirectional network, wherein on connecting the connecting means (7) to the antenna socket and on connecting the bridging device (2, 35) to the computer (19, 36) a communication link can be established along the communication path extending from the mobile radio terminal (1, 37) via its antenna socket (5), the connecting means (7), the interface (8), the computer (19, 36), the bidirectional or multidirectional network (20) and the server (25, 38) to the communication network (3), wherein the communication link enables communication between the mobile radio terminal (1, 37) and the communication network (3) and wherein an emission of radio waves by the antenna (4) of the mobile radio terminal (1, 37) can be suppressed at least while the mobile radio terminal (1, 37) and the communication network (3) are communicating with each other.

2. Bridging device (2, 35) according to claim 1, wherein the connecting means (7) comprises at least on antenna plug (16) that can be plugged into the antenna socket (5) for connecting the connecting means (7) to the antenna socket (5) of the mobile radio terminal (1, 37) and at least one connector terminal (17) that can be connected to a device interface (6) of the mobile radio terminal (1, 37).

3. Bridging device (2, 35) according to claim 2, wherein on connecting the connector terminal (17) to the device interface (6) of the mobile radio terminal (1, 37) a connection can be established between the device interface (6) and the interface (8) of the bridging device (2, 35).

4. Bridging device (2, 35) according to any of claims 2 or 3 including at least one coupling means (14) for an accessory device, wherein a connection can be established between the device interface (6) and the coupling means (14) on connecting the connector terminal (17) to the device interface (6) of the mobile radio terminal (1, 37).

5. Bridging device (2, 35) according to any of the preceding claims, wherein the interface (8) comprises a broadband connection unit or a splitter (9).

6. Bridging device (2, 35) according to any of the preceding claims comprising a transmitting/receiving means (10) arranged for detecting a power applied by the mobile radio terminal (1, 37) and/or the radio frequencies being used at the location of the mobile radio terminal (1, 37) and/or the bridging device (2, 35).

7. Bridging device (2, 35) according to any of the preceding claims comprising a digital signal processor or DSP (12) and/or an analogue-to-digital converter and/or a digital-to-analogue converter (11) and/or a control unit (13).

8. Bridging device (2, 35) according to any of the preceding claims, wherein the connecting means (7) can be connected to a plurality of mobile radio terminals (1, 37) and/or comprising a plurality of interfaces (8), using which the bridging device (2, 35) can be connected to corresponding computers (19, 36) that are connectable to a bidirectional or a multidirectional network.

9. Bridging device (2, 35) according to any of the preceding claims, wherein the bridging device (2, 35) is integrated at least partly with the computer (19, 36), wherein the bridging device (2, 35) and the computer (19, 36) are formed either separable or inseparable from each other.

10. Bridging device (2, 35) according to any of the preceding claims, that can be controlled by means of software, wherein at least parts of the software are stored in the computer (19, 36) and/or in the bridging device (2, 35) and/or can be controlled on authenticating the bridging device (2, 25).with the server (25, 38) at least partly by means of the software and/or wherein the communication of the mobile radio terminal (1, 37) and the communication network (3) can be at least partly controlled by the software.

11. Bridging device (2, 35) according to claim 10, wherein the detection of the radio frequencies being used at the location of the mobile radio terminal (1, 37) and/or the bridging device (2, 35) can be controlled by means of the software and the transmitting/receiving means (10) and/or the mobile radio terminal (1, 37) can further be driven by the software in order to use a radio frequency for the communication link which is not used at the location of the mobile radio terminal (1, 37) and/or the bridging device (2, 35).

12. Bridging device (2, 35) according to claim 11, which is configured to detect the radio frequencies being used at the location of the mobile radio terminal (1, 37) and/or the bridging device (2, 35) once on turning on the mobile radio terminal (1, 37) and/or to detect the radio frequencies being used at the location of the mobile radio terminal and/or the bridging device repeatedly in case of a separate communication link.

13. Communication network (3) including at least one server (25, 38) provided in a communication path for at least partly establishing a communication link between at least one mobile radio terminal (1, 37) and the communication network (3) and comprising a section setup using a bridging device (2, 35) according to claim 1 to 12.

14. Communication network (3) according to claim 13, the server (25, 38) including an authentication centre for authentication of the bridging device (2, 35) and being arranged for suppressing the establishment of a communication link in case the authentication of the bridging device (2, 35) has failed.

15. Communication network (3) according to claim 13 or 14, the communication network (3) being part of a mobile communication network, wherein the communication network (3) being identical to at least a part of the core network (22) or the entire core network (22) of the mobile communication system and the server (25, 38) being implemented in the BSS (21, 28) or in a BSC (24) of the mobile communication network or the server (25, 38) being implemented in a mobile switching centre (26, 29) of the core network (22).

16. Communication network (3) according to claim 15, the mobile communication network (3) being a GSM network and comprising an A interface (27) between the server (25, 38) and a MSC as a mobile switching centre (26, 29) and wherein the server (25, 38) includes a TRAU or wherein the mobile communication network is a GPRS network or a GPRS network with an EDGE modulation and is provided with a Gb interface between the server and an SGSN as a mobile switching centre, the server comprising at least one of a PCU and a virtual VLR and a HLR.

17. Communication network (3) according to claim 15 or 16, the server (25, 38) converting an identification code of the bridging device (2, 35) into a LAC known by the mobile switching centre (26, 29).

18. Communication network (3) according to any of claims 13 to 17, the server (25, 38) being intended for using a telephone service via a bidirectional or multidirectional network, in particular an internet telephone service.

19. Method for establishing a communication link between a mobile radio terminal (1, 37) and a communication network (3) according to any of claims 13 to 18 by means of a bridging device (2, 35) according to any of claims 1 to 12, enabling a communication between the mobile radio terminal (1, 37) and the communication network (3), the method comprising the steps of:
(a) connecting a connecting means (7) of the bridging device (2, 35) to the antenna socket (5) of the mobile radio terminal (1, 37);
(b) connecting the bridging device (2, 35) to the computer (19, 36) connectable to a bidirectional or multidirectional network;
(c) establishing a communication path extending from the mobile radio terminal (1, 37) via its antenna socket (5), the connecting means (7), the interface (8), the computer (19, 36), the bidirectional or multidirectional network (20) and the server (25, 38) to the communication network (3); and
(d) suppressing the emission of radio waves by the antenna (4) of the mobile radio terminal (1, 37) at least while the mobile radio terminal (1, 37) and the communication network (3) are communicating with each other.

20. Method according to claim 19 further comprising the step of detecting a power applied by the mobile radio terminal (1, 37) and/or the radio frequencies being used at the location of the mobile radio terminal (1, 37) and/or the bridging device (2, 35).

21. Method according to claim 20, wherein for the communication link there is used a radio frequency which is not used at the location of the mobile radio terminal (1, 37) and/or the bridging device (2, 35).

22. Method according to claim 20 or 21, wherein the radio frequencies being used at the location of the mobile radio terminal (1, 37) and/or the bridging device (2, 35) are detected once on turning on the mobile radio terminal (1, 37) and/or repeatedly in case of a separate or established communication link.

23. Method according to any of claims 19 to 22, the bridging device (2, 35) being authenticated with the server (25, 38) and the communication link being suppressed, if the authentication has failed.

24. Method according to any of claims 19 to 23, a transmitting power of the mobile radio terminal (1, 37) being controlled by the configuration of the BCCH channel and/or the SACCH channel.

## Revendications

1. Dispositif de pontage (2, 35) pour aménager un tronçon partiel d'un chemin de communication entre au moins un appareil terminal radio mobile (1, 37) présentant un antenne (4) et une douille d'antenne (5) et au moins un réseau de communication (3) présentant au moins un serveur (25, 38), dans lequel le dispositif de pontage (2, 35) comporte au moins un dispositif de connexion (7) pouvant être connecté à la douille d'antenne (5) de l'appareil terminal radio mobile (1, 37) et comportant au moins une interface (8) permettant de relier le dispositif de pontage (2, 35) à un ordinateur (19, 36) pouvant être relié à un réseau bidirectionnel ou multidirectionnel, dans lequel, lors de la connexion du dispositif de connexion (7) à la douille d'antenne (5) et lors de la liaison du dispositif de pontage (2, 35) à l'ordinateur (19, 36) le long de l'appareil terminal radio mobile (1, 37) par sa douille d'antenne (5), le dispositif de connexion (7), l'interface (8), l'ordinateur (19, 36), le réseau bidirectionnel ou multidirectionnel (20) ainsi que le serveur (25, 38), une liaison de communication peut être établie vers le chemin de communication s'étendant vers le réseau de communication (3), laquelle permet une communication entre l'appareil terminal radio mobile (1, 37) et le réseau de communication (3) et dans lequel une émission d'ondes radio par l'antenne (4) de l'appareil terminal radio mobile (1, 37) peut être alors au moins empêchée tant que l'appareil terminal radio mobile (1, 37) et le réseau de communication (3) communiquent entre eux.

2. Dispositif de pontage (2, 35) selon la revendication 1, dans lequel le dispositif de connexion (7) comporte au moins un connecteur d'antenne (16) pouvant être enfiché dans la douille d'antenne (5) pour connecter le dispositif de connexion (7) à la douille d'antenne (5) de l'appareil terminal radio mobile (1, 37) ainsi qu'au moins une borne de connexion (17) pouvant être connectée à une interface d'appareil (6) de l'appareil terminal radio mobile (1, 37).

3. Dispositif de pontage (2, 35) selon la revendication 2, dans lequel, avec la connexion de la borne de connexion (17) à l'interface d'appareil (6) de l'appareil terminal radio mobile (1, 37), une liaison peut être établie entre l'interface d'appareil (6) et l'interface (8) du dispositif de pontage (2, 35).

4. Dispositif de pontage (2, 35) selon l'une des revendications 2 ou 3, comprenant au moins un dispositif de couplage (14) pour un appareil supplémentaire, dans lequel, avec la connexion de la borne de connexion (17) à l'interface d'appareil (6) de l'appareil terminal radio mobile (1, 37), une liaison peut être établie entre l'interface d'appareil (6) et le dispositif de couplage (14).

5. Dispositif de pontage (2, 35) selon l'une des revendications précédentes, dans lequel l'interface (8) comporte une unité de connexion à bande large ou un distributeur (9).

6. Dispositif de pontage (2, 35) selon l'une des revendications précédentes, comportant un dispositif d'émission/de réception (10), qui est aménagé pour saisir une puissance fournie par l'appareil terminal radio mobile (1, 37) et/ou des fréquences radio se trouvant en utilisation sur le site de l'appareil terminal radio mobile (1, 37) et/ou du dispositif de pontage (2, 35).

7. Dispositif de pontage (2, 35) selon l'une des revendications précédentes, comportant un processeur de signaux numériques ou un DSP (12) et/ou un convertisseur analogique/numérique et/ou un convertisseur numérique/analogique (11) et/ou une unité de commande (13).

8. Dispositif de pontage (2, 35) selon l'une des revendications précédentes, dans lequel le dispositif de connexion (7) peut être connecté à une pluralité d'appareils terminaux radio mobiles (1, 37) et/ou qui comporte une pluralité d'interfaces (8), permettant de relier le dispositif de pontage (2, 35) aux ordinateurs respectifs (19, 36), lesquels peuvent être reliés à un réseau bidirectionnel ou multidirectionnel.

9. Dispositif de pontage (2, 35) selon l'une des revendications précédentes, dans lequel le dispositif de pontage (2, 35) est intégré au moins partiellement dans l'ordinateur (19, 36), et le dispositif de pontage (2, 35) et l'ordinateur (19, 36) sont réalisés avec ou sans possibilité de séparation l'un de l'autre.

10. Dispositif de pontage (2, 35) selon l'une des revendications précédentes, pouvant être commandé au moyen d'un logiciel, dans lequel au moins des parties du logiciel sont mémorisées dans l'ordinateur (19, 36) et/ou dans le dispositif de pontage (2, 35), et/ou une authentification du dispositif de pontage (2, 35) chez le serveur (25, 38) peut être commandée au moins partiellement au moyen du logiciel, et/ou la communication de l'appareil terminal radio mobile (1, 37) et du réseau de communication (3) peut être commandée au moins partiellement au moyen du logiciel.

11. Dispositif de pontage (2, 35) selon la revendication 10, dans lequel la saisie des fréquences radio se trouvant en utilisation sur le site de l'appareil terminal radio mobile (1, 37) et/ou du dispositif de pontage (2, 35) peut être commandée au moyen du logiciel, et le dispositif d'émission/de réception (10) et/ou l'appareil terminal radio mobile (1, 37) peut être commandé en outre par le logiciel pour exploiter une fréquence radio inutilisée sur le site de l'appareil terminal radio mobile (1, 37) et/ou du dispositif de pontage (2, 35) pour la liaison de communication.

12. Dispositif de pontage (2, 35) selon la revendication 11, qui est aménagé lors de l'enclenchement de l'appareil terminal radio mobile (1, 37) pour la saisie unique des fréquences radio se trouvant en utilisation sur le site de l'appareil terminal radio mobile (1, 37) et/ou du dispositif de pontage (2, 35) et/ou lors d'une liaison de communication séparée pour la saisie répétée des fréquences radio se trouvant en utilisation sur le site de l'appareil terminal radio mobile (1, 37) et/ou du dispositif de pontage (2, 35).

13. Réseau de communication (3) comportant au moins un serveur (25, 38), qui est prévu au moins pour l'établissement partiel d'une liaison de communication entre au moins un appareil terminal radio mobile (1, 37) et le réseau de communication (3) sur un chemin de communication, lequel présente un tronçon partiel aménagé avec un dispositif de pontage (2, 35) selon l'une des revendications 1 à 12.

14. Réseau de communication (3) selon la revendication 13, dans lequel le serveur (25, 38) comporte une centrale d'authentification pour authentifier le dispositif de pontage (2, 35) et est aménagé pour empêcher l'établissement de la liaison de communication si l'authentification du dispositif de pontage (2, 35) a échoué.

15. Réseau de communication (3) selon l'une des revendications 13 ou 14, dans lequel le réseau de communication (3) est une partie d'un système de communication mobile, dans lequel le réseau de communication (3) est identique à au moins une partie du réseau central (22) ou à tout le réseau central (22) du système de communication mobile, et le serveur (25, 38) est implémenté dans le BSS (21, 28) ou dans un BSC (24) du système de communication mobile, ou le serveur (25, 38) est implémenté dans un poste de communication radio mobile (25, 29) du réseau central (22).

16. Réseau de communication (3) selon la revendication 15, dans lequel le réseau de communication mobile est un réseau GSM et dispose d'une interface A (27) entre le serveur (25, 38) et d'un MSC comme poste de communication de radiotéléphonie mobile (26, 29), et le serveur (25, 38) comporte un TRAU, ou le réseau de communication mobile est un réseau GPRS ou un réseau GPRS avec une modulation EDGE et dispose d'une interface Gb entre le serveur et un SGSN comme poste de communication de radiotéléphonie mobile, sachant que le serveur comporte une PCU et/ou un VLR et/ou un HLR virtuel.

17. Réseau de communication (3) selon l'une des revendications 15 ou 16, dans lequel le serveur (25, 38) convertit un code d'identification du dispositif de pontage (2, 35) en un LAC connu du poste de communication de radiotéléphonie mobile (26, 29).

18. Réseau de communication (3) selon l'une des revendications 13 à 17, dans lequel le serveur (25, 38) est prévu pour une utilisation d'un service téléphonique par un réseau bidirectionnel ou multidirectionnel, en particulier un service téléphonique Internet.

19. Procédé pour établir une liaison de communication entre un appareil terminal radio mobile (1, 37) et un réseau de communication (3) selon l'une des revendications 13 à 18 au moyen d'un dispositif de pontage (2, 35) selon l'une des revendications 1 à 12, lequel permet une communication entre l'appareil terminal radio mobile (1, 37) et le réseau de communication (3), le procédé comportant les étapes suivantes :
(a) la connexion d'un dispositif de connexion (7) du dispositif de pontage (2, 35) à la douille d'antenne (5) de l'appareil terminal radio mobile (1, 37) ;
(b) la liaison du dispositif de pontage (2, 35) à l'ordinateur (19, 36) pouvant être relié à un réseau bidirectionnel ou multidirectionnel ;
(c) l'établissement d'un chemin de communication s'étendant depuis l'appareil terminal radio mobile (1, 37) par sa douille d'antenne (5), le dispositif de connexion (7), l'interface (8), l'ordinateur (19, 36), le réseau bidirectionnel ou multidirectionnel (20) ainsi que le serveur (25, 38) vers le réseau de communication (3).

20. Procédé selon la revendication 19, comportant l'autre étape de saisie d'une puissance fournie par l'appareil terminal radio mobile (1, 37) et/ou de fréquences radio se trouvant en utilisation sur le site de l'appareil terminal radio mobile (1, 37) et/ou du dispositif de pontage (2, 35).

21. Procédé selon la revendication 20, dans lequel une fréquence radio inutilisée sur le site de l'appareil terminal radio mobile (1, 37) et/ou du dispositif de pontage (2, 35) sert à la liaison de communication.

22. Procédé selon l'une des revendications 20 ou 21, dans lequel les fréquences radio se trouvant en utilisation sur le site de l'appareil terminal radio mobile (1, 37) et/ou du dispositif de pontage (2, 35) sont saisies une fois à l'enclenchement de l'appareil terminal radio mobile (1, 37) et/ou de manière répétée lors d'une liaison de communication séparée ou existante.

23. Procédé selon l'une des revendications 19 à 22, dans lequel le dispositif de pontage (2, 35) est authentifié chez le serveur (25, 38) et la liaison de communication est empêchée en cas d'échec de l'authentification.

24. Procédé selon l'une des revendications 19 à 23, dans lequel une puissance d'émission de l'appareil terminal radio mobile (1, 37) est commandée par la configuration du canal BCCH et/ou du canal SACCH.
